# EUROPÄISCHE PATENTSCHRIFT

(11) **EP 1 066 303 B1**
(45) Veröffentlichungstag und Bekanntmachung des Hinweises auf die Patenterteilung: **10.09.2003**
(21) Anmeldenummer: 99915630.0
(22) Anmeldetag: 17.03.1999
(51) Int. Cl.: C07F 17/00, C08F 10/00, C08F 4/622

(54) **KATIONISCHE GRUPPEN ENTHALTENDE ÜBERGANGSMETALLVERBINDUNG ALS OLEFINPOLYMERISATIONSKATALYSATORKOMPONENTE**
TRANSITION METAL COMPOUND CONTAINING CATIONIC GROUPS WHICH IS USED AS AN OLEFIN POLYMERIZATION CATALYST COMPONENT
COMPOSE DE METAUX DE TRANSITION CONTENANT DES GROUPES CATIONIQUES, UTILISE COMME COMPOSANT DE CATALYSEUR POUR LA POLYMERISATION D'OLEFINES

(30) Priorität: 27.03.1998 DE 19813656
(43) Veröffentlichungstag der Anmeldung: 10.01.2001
(73) Patentinhaber: Basell Polyolefine GmbH, 50389 Wesseling (DE)
(72) Erfinder: GÖRES, Markus, D-65760 Eschborn (DE); BOHNEN, Hans, D-47441 Moers (DE)
(74) Vertreter: Meyer, Thomas Hans
(86) Internationale Anmeldenummer: EP9901732
(87) Internationale Veröffentlichungsnummer: WO99050274

(56) Entgegenhaltungen:
- EP-A- 0 670 336

## Beschreibung

Die vorliegende Erfindung betrifft speziell substituierte Metallocene, sowie deren Verwendung in der Polymerisation von Olefinen.

Verfahren zur Herstellung von Polyolefinen mit Hilfe von löslichen, homogenen Katalysatorsystemen, bestehend aus einer Übergangsmetallkomponente vom Typ eines Metallocens und einer Cokatalysator-Komponente vom Typ eines Aluminoxans, einer Lewis-Säure oder einer ionischen Verbindung sind bekannt. Diese Katalysatoren liefern bei hoher Aktivität Polymere und Copolymere mit enger Molmassenverteilung.

Bei Polymerisationsverfahren mit löslichen, homogenen Katalysatorsystemen bilden sich starke Beläge an Reaktorwänden und Rührer aus, wenn das Polymer als Feststoff anfällt. Diese Beläge entstehen immer dann durch Agglomeration der Polymerpartikel, wenn Metallocen und/oder Cokatalysator gelöst in der Suspension vorliegen. Derartige Beläge in den Reaktorsystemen müssen regelmäßig entfernt werden, da diese rasch erhebliche Stärken erreichen, eine hohe Festigkeit besitzen und den Wärmeaustausch zum Kühlmedium verhindern. Industriell in den modernen Polymerisationsverfahren in flüssigem Monomer oder in der Gasphase sind solche homogenen Katalysatorsysteme nicht einsetzbar.

Zur Vermeidung der Belagbildung im Reaktor sind geträgerte Katalysatorsysteme vorgeschlagen worden, bei denen das Metallocen und/oder die als Cokatalysator dienende Aluminiumverbindung auf einem anorganischen Trägermaterial fixiert werden.

Aus der EP-A-0,576,970 A1 sind Metallocene und entsprechende geträgerte Katalysatorsysteme bekannt.

Aus der EP-A-0,670,336 sind geträgerte Katalysatorsysteme, erhältlich durch:
a) Umsetzung eines feinteiligen Trägers mit einer α-trisalkoxysilyl-ω-halogenalkyl-Verbidung;
b) Zugabe eines Metallocenkomplexes mit heterofunktionellen Gruppen am Cyclopentaidenylsystem;
c) Umsetzung mit einem quatemisierenden Agens; und
d) gegebenenfalls Zugabe einer Alumoxanverbindung in der angegebenen Reihenfolge,
bekannt

Ein häufiges Problem bei der technischen Anwendung von geträgerten Katalysatorsystemen besteht jedoch in der Ablösung der Metallocenkomponente vom Trägermaterial ("leeching"), wodurch es z.B. zur unerwünschten Belagsbildung im Reaktor kommt.

Es bestand somit die Aufgabe, neue Metallocene zu finden, die sich fest auf einem Träger fixieren lassen und unter technisch relevanten Polymerisationsbedingungen nicht vom Trägermaterial abgelöst werden.

Überraschenderweise wurde nun gefunden, daß durch speziell substituierte Metallocene, die eine kationische Gruppe als Substituenten enthalten, die der Erfindung zugrunde liegende Aufgabe gelöst wird.

Gegenstand der vorliegenden Erfindung sind somit Metallocene der Formel (I), 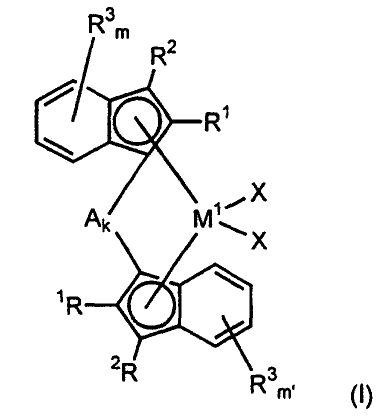 worin
- M¹: ein Übergangsmetall der Gruppe 4 des Periodensystems der Elemente ist wie Titan, Zirkonium oder Hafnium, bevorzugt Zirkonium,
- R¹ und R²: gleich oder verschieden sind und ein Wasserstoffatom, eine C₁-C₂₀-kohlenstoffhaltige Gruppe, bevorzugt eine C₁-C₂₀-Alkylgruppe, eine C₆-C₁₄-Arylgruppe, eine C₂-C₂₀-Alkenylgruppe, eine C₂-C₂₀-Alkinylgruppe, eine C₇-C₂₀-Alkyl-Arylgruppe, die gegebenenfalls ein oder mehrfach, gleich oder verschieden durch Halogen substituiert sein können, ein Halogenatom, eine -SiMe₃-Gruppe, eine OSiMe₃-Grupppe, bedeuten, besonders bevorzugt steht R¹ und/oder R² für Wasserstoff, Methyl, Ethyl, n-Propyl, iso-Propyl, n-Butyl, sec-Butyl, iso-Butyl, tert.-Butyl, n-Pentyl, verzweigtes Pentyl, n-Hexyl, verzweigtes Hexyl, Cyclohexyl, Benzyl,
- R³: gleich oder verschieden, ein Wasserstoffatom oder eine C₁-C₄₀-kohlenstoffhaltige Gruppe bedeutet, bevorzugt eine C₁-C₂₀-Alkylgruppe, die gegebenenfalls substituiert sein kann, insbesondere Methyl, Ethyl, Trifluorethyl, n-Propyl, iso-Propyl, n-Butyl, sec-Butyl, iso-Butyl, tert.-Butyl, Pentyl, Hexyl, Octyl, Cyclopropyl, Cyclopenty oder Cyclohexyl, eine C₆-C₁₄-Arylgruppe, die gegebenenfalls substituiert sein kann, insbesondere Phenyl, Tolyl, Xylyl, tert.-Butyl-phenyl, Ethylphenyl, Trifluormethylphenyl, Bis(trifluormethyl)phenyl, Methoxyphenyl, Fluorphenyl, Dimethylaminophenyl, Trimethyllammoniumpheny-iodid, Dimethylsulfoniumphenyl-bromid, Triethylphosphonium-phenyl-Triflat, Naphthyl, Acenaphthyl, Phenanthrenyl oder Anthracenyl, eine C₂-C₂₀-Alkenylgruppe, eine C₂-C₂₀-Alkinylgruppe, eine C₇-C₂₀-Alkyl-Arylgruppe, ein Halogenatom, eine SiMe₃-Gruppe, eine OSiMe₃-Grupppe, eine C₁-C₂₀-heterocyclische Gruppe, die gegebenenfalls substituiert sein kann, wobei der Begriff Heteroatom sämtliche Elemente mit Ausnahme von Kohlenstoff und Wasserstoff umfaßt, bevorzugt Atome der Gruppen 14, 15 oder 16 des Periodensystems der Elemente, bedeutet, und zwei Reste R³ ein mono- oder polycyclisches Ringsystem bilden können, das seinerseits gegebenenfalls substituiert sein kann, wobei R³ eine kationische Gruppe (-DE_{L})⁺ Y⁻ beinhaltet, in der
- D: ein Atom der Gruppen 15 oder 16 des Periodensystems der Elemente (PSE), bevorzugt Stickstoff, Phosphor, Sauerstoff oder Schwefel,
- E: gleich oder verschieden ist und ein Wasserstoffatom, eine C₁-C₂₀-kohlenstoffhaltige Gruppe, bevorzugt eine C₁-C₂₀-Alkylgruppe, eine C₆-C₁₄-Arylgruppe, eine C₂-C₂₀-Alkenylgruppe, eine C₂-C₂₀-Alkinylgruppe oder eine C₇-C₂₀-Alkyl-Arylgruppe, eine Trialkylsilyl-Gruppe, eine Triarylsilyl-Gruppe, eine Alkylarylsilyl-Gruppe, die gegebenenfalls substituiert sein kann, bedeutet, und gegebenenfalls zwei Reste E ein mono- oder polycyclisches Ringsystem bilden können, das seinerseits substituiert sein kann. Insbesondere bevorzugt ist E gleich ein Wasserstoffatom, Methyl, Ethyl, Propyl, Butyl, Allyl, Benzyl, Methoxymethyl, Benzyloxymethyl, 2-Methoxy-ethoxymethyl, 2-Trimethylsilyl-ethoxy-methyl, Trimethylsilyl.
- L: ist gleich 3, wenn D ein Atom der Gruppe 15 des Periodensystems der Elemente ist, und gleich 2 wenn D ein Atom der Gruppe 16 des Periodensystems der Elemente ist.
- Y: steht für Halogenid, C₁-C₁₀-Alkylsulfonat, C₁-C₁₀-Halogen-alkylsulfonat, C₆-C₂₀-Arylsulfonat, C₆-C₂₀-Halogen-arylsulfonat, C₇-C₂₀-Alkyl-arylsulfonat, C₁-C₂₀-Halogen-alkylcarboxylat, C₁-C₁₀-Alkylsulfat, Tetrafluorborat, Hexafluorphosphat, Hexafluorantimonat, Hexafluorarsenat. Bevorzugt ist Y gleich Chlorid, Bromid, lodid, Triflat, Mesylat, Tosylat, Benzolsulfonat, Trifluoracetat, Methylsulfat, Tetrafluorborat oder Hexafluorphosphat.
- M: ist eine ganze Zahl, kleiner gleich 4 und größer gleich 1, bevorzugt 1 oder 2, besonders bevorzugt gleich 1,
- m': ist eine ganze Zahl, kleiner gleich 4 und größer gleich 1, bevorzugt 1 oder 2, besonders bevorzugt gleich 1,
- k: ist gleich Null oder 1, wobei für k = 0 ein unverbrücktes Metallocen, für k = 1 ein verbrücktes Metallocen vorliegt.
- A: bedeutet eine Verbrückung, der nachfolgenden Art 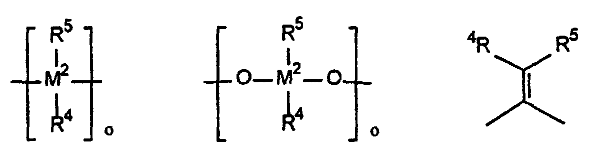 oder =BR⁴, AlR⁴, -S-, -SO-, -SO₂-, =NR⁴, =PR⁴, =P(O)R⁴, o-Phenylen, 2,2'-Biphenylen, wobei
- M²: Kohlenstoff, Silizium, Germanium, Zinn, Stickstoff oder Phosphor ist, bevorzugt Kohlenstoff, Silizium oder Germanium, insbesondere Kohlenstoff oder Silizium,
- o: gleich 1, 2, 3 oder 4 ist, bevorzugt 1 oder 2,
- R⁴ und R⁵: unabhängig voneinander gleich oder verschieden ein Wasserstoffatom, Halogen, eine C₁-C₂₀-kohlenstoffhaltige Gruppe, bevorzugt (C₁-C₂₀)Alkyl, insbesondere eine Methylgruppe, (C₆-C₁₄)Aryl, insbesondere eine Phenyl- oder Naphthylgruppe, (C₁-C₁₀)Alkoxy, (C₂-C₁₀)Alkenyl, (C₇-C₂₀)Arylalkyl, (C₇-C₂₀)Alkylaryl, (C₆-C₁₀)Aryloxy, (C₁-C₁₀)Fluoralkyl, (C₆-C₁₀)Halogenaryl, (C₂-C₁₀)Alkinyl, C₃-C₂₀ Alkylsilyl- , insbesondere Trimethylsilyl, Triethylsilyl, tert.-Butyldimethylsilyl, C₃-C₂₀-Arylsilyl-, insbesondere Triphenylsilyl, oder C₃-C₂₀-Alkylarylsilyl-, insbesondere Dimethylphenylsilyl, Diphenylsilyl oder Diphenyl-tert.-butylsilyl bedeuten und R⁴ und R⁵ gegebenenfalls ein mono- oder polycyclisches Ringsystem bilden können.

Bevorzugt ist A gleich Dimethylsilandiyl, Dimethylgermandiyl, Ethyliden, Methylethyliden, 1,1-Dimethylethyliden, 1,2-Dimethylethyliden, Tetramethylethyliden, Isopropyliden, Phenylmethylmethyliden, Diphenylmethyliden, besonders bevorzugt Dimethylsilandiyl oder Ethyliden.

Die Reste X sind gleich oder verschieden und bedeuten ein Wasserstoffatom, ein Halogenatom wie Fluor, Chlor, Brom oder lod, eine Hydroxylgruppe, eine C₁-C₁₀-Alkylgruppe wie beispielsweise Methyl, Ethyl, Propyl, iso-Propyl, n-Butyl, iso-Butyl, sec-Butyl, tert.-Butyl, Hexyl, Cyclohexyl, eine C₆-C₁₅-Arylgruppe wie beispielsweise Phenyl, Naphthyl, eine C₁-C₁₀-Alkoxygruppe wie beispielsweise Methoxy, Ethoxy, tert.-Butoxy, eine C₆-C₁₅-Aryloxygruppe, eine Benzylgruppe, bevorzugt ein Chloratom, ein Fluoratom, eine Methylgruppe, eine Benzylgruppe, besonders bevorzugt ein Chloratom oder eine Methylgruppe.

Besonders bevorzugte erfindungsgemäße Metallocene der Formel (I) haben die Formel (I*), 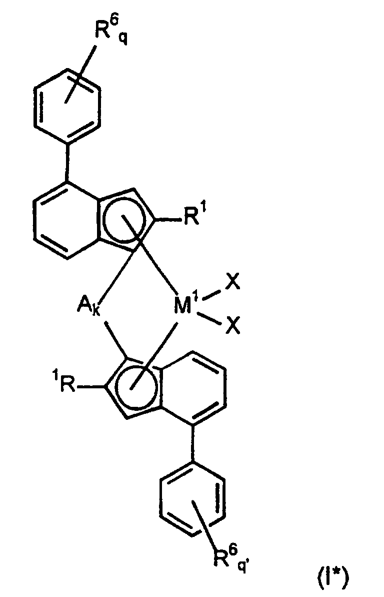 worin
- M¹, A, R¹, k und X: wie in Formel (I) definiert sind und
- R⁶: gleich oder verschieden, ein Wasserstoffatom oder eine C₁-C₄₀-kohlenstoffhaltige Gruppe bedeutet, vorzugsweise eine C₁-C₂₀-Alkylgruppe, die gegebenenfalls substituiert sein kann, insbesondere Methyl, Ethyl, Trifluormethyl, Trifluorethyl, n-Propyl, iso-Propyl, n-Butyl, sec-Butyl, iso-Butyl, tert.-Butyl, Pentyl, Hexyl, Octyl, Cyclopropyl, Cyclopenty, Cyclohexyl, eine C₆-C₁₄-Arylgruppe, die substituiert sein kann, wie Phenyl, eine C₂-C₂₀-Alkinylgruppe, eine C₇-C₂₀-Alkyl-Arylgruppe, Halogen, eine OR⁴-Gruppe, eine SiR⁴₃-Gruppe, eine NR⁴₂-Gruppe, eine SR⁴-Gruppe, und zwei Reste R⁴ und R⁶, jeweils oder miteinander, ein mono- oder polycyclisches Ringsystem bilden können, das seinerseits substituiert sein kann, wobei R⁴ wie in Formel (I) definiert ist, und mindestens einer der Reste R⁶ eine kationische Gruppe (-DE_{L})⁺ Y⁻ trägt bzw. ist, wobei D, E, L und Y wie in Formel (I) definiert sind,
- q: eine ganze Zahl, kleiner gleich 5 und größer gleich 1, bevorzugt 1 oder 2, besonders bevorzugt gleich 1, und
- q': eine ganze Zahl, kleiner gleich 5 und größer gleich 1, bevorzugt 1 oder 2, besonders bevorzugt gleich 1, ist.

Erläuternde, jedoch nicht einschränkende Beispiele für erfindungsgemäße Metallocene der Formel (I) sind:
Dimethylsilandiylbis(2-methyl-4-(4'-trimethylammonium-phenyl)-indeny)ldichlorozirkonium-diiodid
Dimethylsilandiylbis(2-methyl-4-(4'-trimethylammonium-phenyl)-indeny)ldichlorotitan-diiodid
Dimethylsilandiylbis(2-methyl-4-(4'-trimethylammonium-phenyl)-indeny)ldichlorohafnium-diiodid
Dimethylsilandiylbis(2-methyl-4-(3'-trimethylammonium-phenyl)-indenyl)-dichlorozirkonium-diiodid
Dimethylsilandiylbis(2-methyl-4-(2'-trimethylammonium-phenyl)-indenyl)-dichlorozirkonium-diiodid
Dimethylsilandiylbis(2-methyl-4-(3',5'-bis(trimethylammonium)-phenyl)-indenyl)-dichlorozirkonium-tetraiodid
Dimethylsilandiylbis(2-methyl-4-(4'-trimethylammonium-naphthyl)-indeny)ldichlorozirkonium-diiodid
Dimethylsilandiylbis(2-methyl-4-(4'-trimethylammonium-phenyl)-indeny)ldichlorozirkonium-ditosylat
Dimethylsilandiylbis(2-ethyl-4-(4'-trimethylammonium-phenyl)-indenyl)-dichlorozirkonium-ditriflat
Dimethylsilandiylbis(2-methyl-4-(4'-dimethylammonium-phenyl)-indenyl)-dichlorozirkonium-dichlorid
Dimethylsilandiylbis(2-methyl-4-(4'-trimethylammonium-phenyl)-indeny)ldichlorozirkonium-bis-tetrafluorborat
Dimethylsilandiylbis(2-methyl-4-(4'-N-methyl-N-pyrrolidino-phenyl)-indeny)l-dichlorozirkonium-diiodid
Dimethylsilandiylbis(2-methyl-4-(4'-dimethylammonium-phenyl)-indenyl)-dichlorotitan-dichlorid
Dimethylsilandiylbis(2-methyl-4-(4'-dimethyl(methoxymethyl)ammonium-phenyl)-indenyl)-dichlorozirkonium-dichlorid
Dimethylsilandiylbis(2-methyl-4-(4'-dimethyl(2"-methoxy-ethoxy-methyl)ammoniumphenyl)-indenyl)-dichlorozirkonium-dichlorid
Dimethylsilandiylbis(2-methyl-4-(4'-dimethyl(benzyloxymethyl)ammonium-phenyl)-indenyl)-dichlorozirkonium-dichlorid
Dimethylsilandiylbis(2-methyl-4-(4'-dimethyl-(2"-trimethylsilyl-ethoxymethyl)ammonium-phenyl)-indenyl)-dichlorohafnium-dichlorid
Dimethylsilandiylbis(2-methyl-4-(4'-dimethylbenzylammonium-phenyl)-indenyl)-dichlorozirkonium-dichlorid
Dimethylsilandiylbis(2-methyl-4-(4'-dimethylallylammonium-phenyl)-indenyl)-dichlorozirkonium-diiodid
Dimethylsilandiylbis(2-methyl-4-(4'-triethylammonium-phenyl)-indenyl)-dichlorozirkonium-diiodid
Dimethylsilandiylbis(2-ethyl-4-(4'-dimethyl-(2"-trimethylsilyl-ethoxymethyl)ammonium-phenyl)-indenyl)-dichlorohafnium-dichlorid
Dimethylsilandiylbis(2-ethyl-4-(4'-dimethylbenzylammonium-phenyl)-indenyl)-dichlorozirkonium-dichlorid
Dimethylsilandiylbis(2-ethyl-4-(4'-dimethylallylammonium-phenyl)-indenyl)-dichlorozirkonium-diiodid
Dimethylsilandiylbis(2-ethyl-4-(4'-trimethylammonium-phenyl)-indenyl)-dichlorozirkonium-diiodid
Dimethylsilandiylbis(2-n-butyl-4-(4'-trimethylammonium-phenyl)-indenyl)-dichlorozirkonium-diiodid
Dimethylsilandiylbis(2-isopropyl-4-(4'-triethylammonium-phenyl)-indenyl)-dichlorozirkonium-dibromid
Dimethylsilandiylbis(2-iso-butyl-4-(4'-triethylammonium-phenyl)-indenyl)-dichlorozirkonium-ditriflat
Dimethylsilandiylbis(2-ethyl-4-(4'-triethylphosphomium-phenyl)-indenyl)-dichlorozirkonium-diiodid
Dimethylsilandiylbis(2-methyl-4-(4'-dimethylsulfonium-phenyl)-indenyl)-dichlorozirkonium-dibromid
Dimethylsilandiylbis(2-ethyl-4-(4'-dimethylsulfonium-phenyl)-indenyl)-dichlorozirkonium-dibromid
Dimethylsilandiylbis(2-methyl-4-(3'-dimethylsulfonium-phenyl)-indenyl)-dichlorozirkonium-dibromid
Dimethylsilandiylbis(2-methyl-4-(2'-dimethylsulfonium-phenyl)-indenyl)-dichlorozirkonium-dibromid
Dimethylsilandiylbis(2-methyl-4-(3',5'-Bis(dimethylsulfonium)-phenyl)-indenyl)-dichlorozirkonium-tetrabromid
Dimethylsilandiylbis(2-methyl-4-(4'-dibenzylsulfonium-phenyl)-indenyl)-dichlorozirkonium-dibromid
Dimethylsilandiylbis(2-methyl-4-(4'-methyl(methoxymethyl)sulfonium-phenyl)-indenyl)-dichlorozirkonium-dichlorid
Dimethylsilandiylbis(2-methyl-4-(4'-diallylsulfonium-phenyl)-indenyl)-dichlorozirkonium-dibromid
Dimethylsilandiylbis(2-methyl-4-(3'-diphenylethylphosphonium-phenyl)-indenyl)-dichlorozirkonium-diiodid
Dimethylsilandiylbis(2-methyl-4-(3'-trimethylphosphonium-phenyl)-indenyl)-dichlorozirkonium-ditriflat
Methylphenylsilandiylbis(2-iso-butyl-4-(4'-triethylammonium-phenyl)-indenyl)-dichlorozirkonium-ditosylat
1,2-Ethandiyl-bis(2-methyl-4-(3'-dimethylammonium-phenyl)-indenyl)-dichlorozirkonium-bis-trifluoracetat
1,2-Ethandiyl-bis(2-methyl-4-(4'-dimethylsulfonium-phenyl)-indenyl)-dichlorozirkonium-dibromid
1,2-Ethandiyl-bis(2-methyl-4-(3'-diphenylethylphosphonium-phenyl)-indenyl)-dichlorozirkonium-diiodid
Dimethylsilandiylbis(2-methyl-5-trimethylammonium-indenyl)-dichlorozirkoniumdichlorid
Dimethylsilandiylbis(2-methyl-5-trimethylphosphonium-indenyl)-dichlorozirkoniumdichlorid
1,2-Ethandiylbis(2-methyl-4-dimethylbenzylammonium-indenyl)-dichlorozirkoniumdibromid
1,2-Ethandiylbis(2-methyl-4-phenyl-5-dimethylbenzylammonium-indenyl)-dichlorozirkonium-dibromid
Dimethylsilandiylbis(2-methyl-4-phenyl-6-trimethylammonium-indenyl)-dichlorozirkonium-dichlorid
Dimethylsilandiylbis(2-methyl-5-dimethylsulfonium-indenyl)-dichlorozirkoniumdibromid
Dimethylsilandiylbis(2-methyl-4-(4'-(2"-trimethylammonium-ethyl)-phenyl-indenyl)-dichlorozirkonium-dichlorid
Dimethylsilandiylbis(2-methyl-4-(4'-(3"-dimethylsulfonium-propyl)-phenyl-indenyl)-dichlorozirkonium-diiodid
Dimethylsilandiylbis(2-methyl-4-(3'-(2"-trimethylammonium-ethyl)-phenyl-indenyl)-dichlorozirkonium-dichlorid
Dimethylsilandiylbis(2-methyl-4-(2'-trimethylammonium-ethyl)-indenyl)-dichlorozirkonium-dichlorid

Das Verfahren zur Herstellung von Metallocenen der Formel (I) ist dadurch gekennzeichnet, daß ein Metallocen der Formel (la) mit einem Reagenz EY umgesetzt wird, wobei ein Metallocen der Formel (I) erhalten wird.

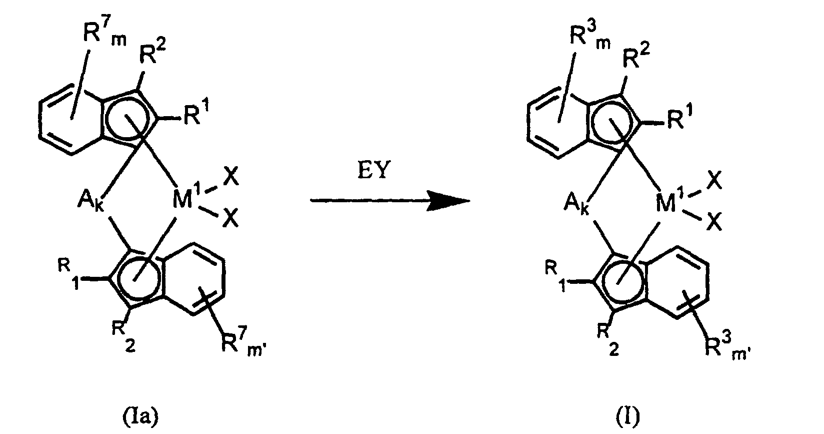

Die Reste R¹, R², R³, A, M¹, X, E, Y, k, m und m' sind definiert wie in Formel (I), und R⁷ bedeutet, gleich oder verschieden, ein Wasserstoffatom oder eine C₁-C₄₀kohlenstoffhaltige Gruppe, vorzugsweise eine C₁-C₂₀-Alkylgruppe, die gegebenenfalls substituiert sein kann, insbesondere Methyl, Ethyl, Trifluorethyl, n-Propyl, iso-Propyl, n-Butyl, sec-Butyl, iso-Butyl, tert.-Butyl, Pentyl, Hexyl, Octyl, Cyclopropyl, Cyclopenty, Cyclohexyl, eine C₆-C₁₄-Arylgruppe, die gegebenenfalls substituiert sein kann, insbesondere Phenyl, Tolyl, Xylyl, tert.-Butyl-phenyl, Ethylphenyl, Trifluormethylphenyl, Bis(trifluormethyl)phenyl, Methoxyphenyl, Fluorphenyl, Dimethylaminophenyl, Methylthiophenyl, Diethylphosphino-phenyl, Naphthyl, Acenaphthyl, Phenanthrenyl, Anthracenyl, eine C₂-C₂₀-Alkenylgruppe, eine C₂-C₂₀-Alkinylgruppe, eine C₇-C₂₀-Alkyl-Arylgruppe, ein Halogenatom, eine SiMe₃-Gruppe, eine OSiMe₃-Grupppe, eine C₁-C₂₀-heterocyclische Gruppe, die gegebenenfalls substituiert sein können, wobei der Begriff Heteroatom sämtliche Elemente mit Ausnahme von Kohlenstoff und Wasserstoff umfaßt und bevorzugt Atome der Gruppen 14, 15 oder 16 des Periodensystems der Elemente bedeutet, und zwei Reste R⁷ gegebenenfalls ein mono- oder polycyclisches Ringsystem bilden können, das seinerseits substituiert sein kann.
Das Metallocen der Formel (Ia) weist an R⁷ eine Gruppe DE_{L-1} auf, wobei D ein Atom der Gruppen 15 oder 16 des Periodensystems der Elemente (PSE) bedeutet, insbesondere Stickstoff, Phosphor, Sauerstoff oder Schwefel, und E und L wie in Formel (I) definiert sind.

Die Darstellung von Metallocenen der Formel (Ia) erfolgt nach literaturbekannten Verfahren (z.B. EP-A-0,576,970; Chem. Lett., 1991, 11, S.2047 ff; Journal of Organometallic Chem., 288 (1985) 63 - 67 und dort zitierte Dokumente).

Bei dem Reagenz EY handelt es sich um eine, einen Rest E übertragende Verbindung, wobei E und Y wie in Formel (I) definiert sind.

Erläuternde, jedoch nicht einschränkende Beispiele für das Reagenz EY sind: Methyliodid, Methylbromid, Methylchlorid, Methyltriflat, Methyltrifluoracetat, Methansulfonsäuremethylester, p-Toluolsulfonsäuremethylester, Dimethylsulfat, Trimethyloxoniumtetrafluoroborat, Trimethyloxoniumhexafluorphosphat, Ethyliodid, Ethylbromid, Ethylchlorid, Triethyloxoniumtetrafluoroborat, Triethyloxoniumhexafluorphosphat, Propyliodid, Propylbromid, Propyltriflat, Butylbromid, Butyliodid, Butylchlorid, Pentylbromid, Octylbromid, Benzylchlorid, Benzylbromid, Benzyltriflat, Allylbromid, Allylchlorid, p-Methoxybenzylchlorid, Trimethylsilylchlorid, Trimethylsilylbromid, Trimethylsilyliodid, Trimethylsilyltriflat, tert.-Butyldimethylsilylchlorid, tert.-Butyldimethylsilyltriflat, Triphenylsilylchlorid, Triphenylsilyliodid, Triphenylsilyltriflat, Methoxymethylchlorid (MOMCI), 2-Methoxyethoxy-methylchlorid (MEMCI), 2-Trimethylsilyl-ethoxy-methylchlorid (SEMCI), Benzyloxymethylchlorid (BOMCI), Fluorwasserstoff, Chlorwasserstoff, Bromwasserstoff, lodwasserstoff, Trifluoressigsäure, Methansulfonsäure, Trifluormethansulfonsäure, p-Toluolsulfonsäure, Schwefelsäure, Perchlorsäure, Essigsäure, Triethylamin-hydrochlorid, Trimethylamin-hydrofluorid, Tetrafluorborsäure-Diethyletherat, Hexafluorphosphorsäure

Das Verfahren kann in Gegenwart eines geeigneten Lösungsmittels oder in Substanz durchgeführt werden. Nichteinschränkende Beispiele für geeignete Lösungsmittel sind Kohlenwasserstoffe, die halogeniert sein können, wie Benzol, Toluol, Xylol, Mesitylen, Ethylbenzol, Chlorbenzol, Dichlorbenzol, Fluorbenzol, Dekalin, Pentan, Hexan, Cyclohexan, Dichlormethan, Chloroform, Tetrachlormethan, 1,2-Dichlorethan, Trichlorethylen, Ether wie Diethylether, Di-n-Butylether, MTBE, THF, DME, Anisol, Triglyme, Dioxan, Amide wie DMF, Dimethylacetamid, NMP, Sulfoxide wie DMSO, Phosphoramide wie Hexamethylphosphorsäuretriamid, Harnstoff-Derivate wie DMPU, Ketone wie Aceton, Ethylmethylketon, Ester wie Essigsäureethylester, Nitrile wie Acetonitril sowie beliebige Gemische aus jenen Stoffen.

Das Verfahren wird im allgemeinen in einem Temperaturbereich von -100°C bis +500°C durchgeführt, bevorzugt in einem Temperaturbereich von -78°C und +200°C, besonders bevorzugt bei einer Temperatur zwischen 0°C und 100°C.

Die Umsetzung kann in einem Einphasensystem oder in einem Mehrphasensystem durchgeführt werden.
Das molare Verhältnis von Reagenz EY zu Metallocen (la) liegt im allgemeinen zwischen 0,5 und 100, bevorzugt zwischen 1und 10.

Die Konzentration an Metallocen (Ia) bzw. an Reagenz EY in der Reaktionsmischung liegt im allgemeinen im Bereich zwischen 0,001 mol/l und 8 mol/l, bevorzugt im Bereich zwischen 0,01 und 3 mol/l, besonders bevorzugt im Bereich zwischen 0,1 mol/l und 2 mol/l.

Die Dauer der Umsetzung von Metallocenen der Formel (la) mit einem Reagenz EY liegt im allgemeinen im Bereich zwischen 5 Minuten und 1 Woche, bevorzugt im Bereich zwischen 15 Minuten und 48 Stunden.

Die erfindungsgemäßen Verbindungen eignen sich insbesondere als Bestandteil von Katalysatorsystemen in der Polymerisation von Olefinen auf Basis von Ethylen, Propylen, Norbonadien sowie von funktionalisierten Olefinen, wobei Homo- und Copolymere gleichermaßen zugänglich sind.

Die Efindung wird durch folgende, die Erfindung jedoch nicht einschränkenden Beispiele erläutert.

Allgemeine Angaben: Die Herstellung und Handhabung der organometallischen Verbindungen erfolgte unter Ausschluß von Luft und Feuchtigkeit unter Argon-Schutzgas (Schlenk-Technik bzw. Glove-Box). Alle benötigten Lösemittel wurden vor Gebrauch mit Argon gespült und über Molsieb absolutiert.

### Beispiel 1

### Dimethylsilandiylbis(2-methyl-4-(4'-trimethylammonium-phenyl)-indenyl)-dichlorozirkonium-diiodid (1)

4.5 g (0.02 mol) 2-Methyl-7-brom-1-indanon, 3.63 g (0.022 mol) 4-N,N-Dimethylamino-phenylboronsäure und 4.66 g (0.044 mol) Natriumcarbonat wurden in einem Gemisch aus 80 ml 1,2-Dimethoxyethan und 25 ml Wasser vorgelegt, mehrfach entgast und mit Argon gesättigt. 90 mg (0.4 mmol) Palladiumacetat und 0.2 g (0.8 mmol) Triphenylphosphin wurden zugegeben und das Reaktionsgemisch 3 Stunden bei 80°C gerührt. Nach Zugabe von 100 ml Wasser wurde mit Diethylether extrahiert, die vereinigten organische Phasen mit Wasser gewaschen und über Magnesiumsulfat getrocknet. Nach Entfernung des Lösungsmittels und Säulenfiltration über neutralem Aluminiumoxid (Dichlormethan) wurden 5.1 g 2-Methyl-7-(4'-N,N-dimethylamino-phenyl)-1-indanon erhalten.
¹H-NMR (300 MHz, CDCl₃): 7.58-7.24 (m, 5H), 6.78 (d, 2H), 3.38 (m, 1H), 3.01 (s, 6H), 2.78-2.65 (m, 2H), 1.28 (d, 2H);

Zu einer Lösung von 5.0 g (0.019 mol) 2-Methyl-7-(4'-N,N-dimethylamino-phenyl)-1-indanon in 100 ml THF/Methanol (2:1) wurden bei 0°C 760 mg (20 mmol) Natriumborhydrid zugesetzt und 18 Stunden bei Raumtemperatur (20°C) gerührt. Die Reaktionsmischung wurde auf Eiswasser gegeben, mit konz. Salzsäure bis pH 1 versetzt, dann mit 2 M Natriumhydroxid-Lösung auf pH 9 gebracht und mehrmals mit Dichlormethan extrahiert. Die vereinigten organische Phasen wurden mit Wasser sowie Natriumchlorid-Lösung gewaschen und über Magnesiumsulfat getrocknet. Nach Entfernung des Lösungsmittels erhält man das Rohprodukt 2-Methyl-7-(4'-N,N-dimethylamino-phenyl)-1-indanol, welches in 100 ml Toluol aufgenommen wurde. Nach Zugabe von 3.1 g (0.027 mol) Trifluoressigsäure wurde 2 Stunden bei 100°C gerührt. Anschließend wurde mit 2 M Natriumhydroxid-Lösung bis pH 9 versetzt, die Phasen getrennt und das Lösungsmittel entfernt. Es wurden 4.6 g 2-Methyl-4-(4'-N,N-dimethylamino-phenyl)-inden isoliert.
¹H-NMR (300 MHz, CDCl₃): 7.46-7.21 (m, 5H), 6.86-6.81 (m, 2H), 6.72 (s, 1H), 3.36 (s, 2H), 3.05 (s, 6H), 2.15 (s, 3H);

Eine Lösung von 10.0 g (40.2 mmol) 2-Methyl-4-(4'-N,N-dimethylamino-phenyl)-inden in 100 ml Toluol und 5 ml THF wurden bei Raumtemperatur mit 16.7 ml (44 mmol) einer 20% Lösung von Butyllithium in Toluol versetzt und 2 Stunden auf 80°C erhitzt. Anschließend wurde die Suspension auf 0°C gekühlt und mit 2.76 g (21mmol) Dimethyldichlorsilan versetzt. Die Reaktionsmischung wurde noch 1 Stunde auf 80°C erhitzt und anschließend mit 50 ml Wasser gewaschen. Das Lösungsmittel wurde im Vakuum entfernt und der Rückstand aus Heptan bei -20°C umkristallisiet. Es wurden 7.8 g Ligand als farblose Kristalle gewonnen.
5.0 g (9 mmol) des Liganden wurden in 70 ml Diethylether gelöst, bei Raumtemperatur mit 6.84 ml (18 mmol) einer 20%igen Lösung von Butyllithium in Toluol versetzt und anschließend 3 Stunden zum Rückfluß erhitzt. Das Lösungsmittel wurde im Vakuum entfernt und der Rückstand mit 50 ml Hexan über eine G3-Schlenkfritte filtriert, mit 50 ml Hexan nachgewaschen und getrocknet (0.1 mbar, 20°C). Das Dilithiumsalz wurde bei -78°C zu einer Suspension von 2.2 g (9.5 mmol) Zirkoniumtetrachlorid in 50 ml Methylenchlorid gegeben und im Verlauf von 18 Stunden unter Rühren auf Raumtemperatur erwärmt. Der Ansatz wurde über eine G3-Fritte filtriert und der Rückstand portionsweise mit insgesamt 400 ml Methylenchlorid nachextrahiert. Die vereinigten Filtrate wurden im Vakuum vom Lösungsmittel weitestgehend befreit. Der aus Methylenchlorid ausgefallene, kristalline Niederschlag wurde abgetrennt. Es wurden 3.8 g Metallocen als Gemisch von racemischer und meso-Form im Verhältnis 1:1 erhalten. Nach erneuter Umkristallisation aus Methylenchlorid wurden 1.4 g des racemischen Komplexes in Form gelber Kristalle isoliert.
¹H-NMR (300 MHz, CDCl₃): 7.62-7.00 (m, 10H), 6.88-6.76 (m, 6H), 2.95 (s, 12H), 2.42 (s, 6H), 1.18 (s, 6H);

Eine Lösung von 1.0 g (1.4 mmol) Dimethylsilandiylbis(2-methyl-4-(4'-N,N-dimethylamino-phenyl)-indenyl)-zirkoniumdichlorid wurde in einem Gemisch aus 15 ml Toluol und 15 ml THF gelöst, mit 7.95 g (5.6 mmol) Methyliodid versetzt und 3 Stunden bei 45°C gerührt. Anschließend wurde die Reakionsmischung zur Trockne eingeengt, der Rückstand mit wenig Toluol und Pentan gewaschen, und man erhielt 1.29 g Dimethylsilandiylbis(2-methyl-4-(4'-trimethyl-ammonium-phenyl)-indenyl)-dichlorozirkonium-diiodid (1) als gelb-orangen Feststoff.
¹H-NMR (300 MHz, DMSO-d6): 7.70-7.05 (m, 10H), 6.89-6.79 (m, 6H), 3.51 (s, 18H), 2.49 (s, 6H), 1.21 (s, 6H);

### Beispiel 2

### Dimethylsilandiylbis(2-methyl-4-(4'-dimethylsulfonium-phenyl)-indenyl)-dichlorozirkonium-dibromid [2]

Die Darstellung von Dimethylsilandiylbis(2-methyl-4-(4'-methylthio-phenyl)-indenyl)-zirkoniumdichlorid erfolgte entsprechend Beispiel 1. Anschließend wurde analog Beispiel 1 mit Methylbromid zu [2] umgesetzt.

### Beispiel 3

### Dimethylsilandiylbis(2-methyl-4-(3'-diphenylethylphosphonium-phenyl)-indenyl)-dichlorozirkonium-diiodid [3]

Die Darstellung von Dimethylsilandiylbis(2-methyl-4-(3'-diphenylphosphino-phenyl)-indenyl)- zirkoniumdichlorid erfolgte entsprechend Beispiel 1. Anschließend wurde analog Beispiel 1 mit Ethyliodid zu [3] umgesetzt.

### Beispiel 4

### Dimethylsilandiylbis(2-methyl-4-(4'-dimethylammonium-phenyl)-indenyl)-dichlorozirkonium-dichlorid [4]

Die Darstellung von Dimethylsilandiylbis(2-methyl-4-(4'-dimethylamino-phenyl)-indenyl)- zirkoniumdichlorid erfolgte entsprechend Beispiel 1. Anschließend wurde bei 0°C mit zwei Äquivalent Chlorwasserstoff-Lösung in THF zu [4] umgesetzt.

### Beispiel 5

### Dimethylsilandiylbis(2-methyl-4-(4'-dimethyl(methoxymethyl)ammonium-phenyl)-indenyl)-dichlorozirkonium-dichlorid [5]

Die Darstellung von Dimethylsilandiylbis(2-methyl-4-(4'-dimethyl(methoxymethyl)-ammonium-phenyl)-indenyl)-zirkoniumdichlorid erfolgte entsprechend Beispiel 1. Anschließend wurde analog Beispiel 1 mit Methoxymethylchlorid (MOMCI) zu [5] umgesetzt.

### Beispiel 6

### 1,2-Ethandiyl-bis(2-methyl-4-(3'-dlmethylammonium-phenyl)-indenyl)-dichlorozirkonium-bis-trifluoracetat [6]

Die Darstellung von Dimethylsilandiylbis(2-methyl-4-(3'-dimethylammonium-phenyl)-indenyl)-zirkoniumdichlorid erfolgte entsprechend Beispiel 1 unter Verwendung von 1,2-Dibromethan bei der Ligandsynthese. Anschließend wurde bei 0°C mit zwei Äquivalenten Trifluoressigsäure zu [6] umgesetzt.

### Beispiel 7

### Dimethylsilandiylbis(2-methyl-4-(4'-dimethyl-(2"-trimethylsilyl-ethoxymethyl)ammonium-phenyl)-indenyl)-dichlorohafnium-dichlorid [7]

Die Darstellung von Dimethylsilandiylbis(2-methyl-4-(4'-dimethyl-(2"-trimethylsilylethoxy-methyl)ammonium-phenyl)-indenyl)-hafniumdichlorid erfolgte entsprechend Beispiel 1 unter Verwendung von Hafniumtetrachlorid bei der Komplexsynthese. Anschließend wurde analog Beispiel 1 mit 2-Trimethylsilyl-ethoxy-methylchlorid (SEMCI) zu [7] umgesetzt.

## Patentansprüche

1. Verbindung der Formel (I) 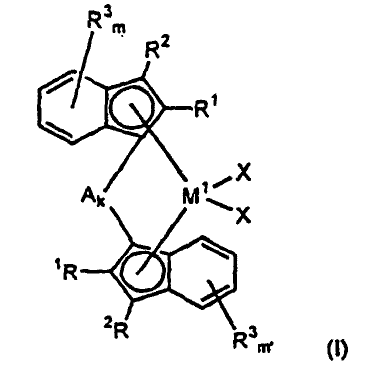 worin
M¹ ein Übergangsmetall der Gruppe 4 des Periodensystems der Elemente ist,
R¹ und R² gleich oder verschieden sind und ein Wasserstoffatom, ein Halogenatom, eine C₁-C₂₀-kohlenstoffhaltige Gruppe, bedeuten,
R³ gleich oder verschieden, ein Wasserstoffatom, ein Halogenatom oder eine C₁-C₄₀-kohlenstoffhaltige Gruppe bedeutet, und zwei Reste R³ gegebenenfalls ein mono- oder polycyclisches Ringsystem bilden können, das seinerseits substituiert sein kann, wobei R³ eine kationische Gruppe (-DE_{L})⁺Y⁻ beinhaltet
worin
D ein Atom der Gruppen 15 oder 16 des Periodensystems der Elemente (PSE),
E gleich oder verschieden ist und ein Wasserstoffatom, eine C₁-C₂₀-kohlenstoffhaltige Gruppe, bedeutet, und zwei Reste E gegebenenfalls ein mono- oder polycyclisches Ringsystem bilden können, das seinerseits substituiert sein kann,
L gleich 3 ist, wenn D ein Atom der Gruppe 15 des Periodensystems der Elemente ist, und gleich 2 ist wenn D ein Atom der Gruppe 16 des Periodensystems der Elemente ist,
Y Halogen, C₁-C₂₀-Alkylsulfonat, C₁-C₁₀-Halogen-alkylsulfonat, C₆-C₂₀-Arylsulfonat, C₆-C₂₀-Halogen-arylsulfonat, C₇-C₂₀-Alkyl-arylsulfonat, C₁-C₂₀-Halogen-alkylcarboxylat, C₁-C₁₀-Alkylsulfat, Tetrafluorborat, Hexafluorphosphat, Hexafluorantimonat oder Hexafluorarsenat bedeutet,
m eine ganze Zahl, kleiner gleich 4 und größer gleich 1 ist,
m' eine ganze Zahl, kleiner gleich 4 und größer gleich 1, ist,
k gleich Null oder 1 ist, wobei für k = 0 ein unverbrücktes Metallocen, für k = 1 ein verbrücktes Metallocen vorliegt,
A eine Verbrückung der Formel 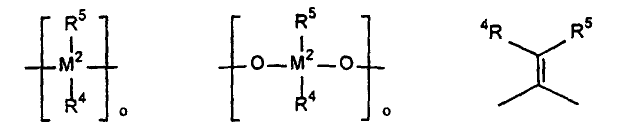 oder =BR⁴, AlR⁴, -S-, -SO-, -SO₂-, =NR⁴, =PR⁴, =P(O)R⁴, o-Phenylen, 2,2'-Biphenylen, wobei
M² Kohlenstoff, Silizium, Germanium, Zinn, Stickstoff oder Phosphor ist,
o gleich 1, 2, 3 oder 4 ist,
R⁴ und R⁵ unabhängig voneinander gleich oder verschieden ein Wasserstoffatom, Halogen oder eine C₁-C₂₀-kohlenstoffhaltige Gruppe bedeuten und R⁴ und R⁵ gegebenenfalls ein mono- oder polycyclisches Ringsystem bilden können.

2. Verbindung nach Anspruch 1, **dadurch gekennzeichnet, daß** in Formel (I),
M¹ Titan, Zirkonium oder Hafnium,
R¹ und R² gleich oder verschieden sind und ein Wasserstoffatom, eine C₁-C₂₀-Alkylgruppe, eine C₆-C₁₄-Arylgruppe, eine C₂-C₂₀-Alkenylgruppe, eine C₂-C₂₀-Alkinylgruppe, eine C₇-C₂₀-Alkyl-Arylgruppe, die gegebenenfalls ein oder mehrfach, gleich oder verschieden durch Halogen substituiert sein können, ein Halogenatom, eine -SiMe₃-Gruppe, eine OSiMe₃-Grupppe, bedeuten,
R³ gleich oder verschieden, ein Wasserstoffatom, eine C₁-C₂₀-Alkylgruppe, die gegebenenfalls substituiert sein kann, eine C₆-C₁₄-Arylgruppe, die gegebenenfalls substituiert sein kann, eine C₂-C₂₀-Alkenylgruppe, eine C₂-C₂₀-Alkinylgruppe, eine C₇-C₂₀-Alkyl-Arylgruppe, ein Halogenatom, eine SiMe₃-Gruppe, eine OSiMe₃-Grupppe, eine C₁-C₂₀-heterocyclische Gruppe, die gegebenenfalls substituiert sein können, wobei der Begriff Heteroatom sämtliche Elemente mit Ausnahme von Kohlenstoff und Wasserstoff umfaßt und bevorzugt Atome der Gruppen 14, 15 oder 16 des Periodensysterns der Elemente bedeutet, und zwei Reste R³ gegebenenfalls ein mono- oder polycyclisches Ringsystem bilden können, das seinerseits substituiert sein kann, wobei R³ eine kationische Gruppe (-DE_{L})⁺ Y⁻ beinhaltet
worin
D Stickstoff, Phosphor, Sauerstoff oder Schwefel,
E gleich oder verschieden ist und ein Wasserstoffatom, eine C₁-C₂₀-Alkylgruppe, eine C₆-C₁₄-Arylgruppe, eine C₂-C₂₀-Alkenylgruppe, eine C₂-C₂₀-Alkinylgruppe, eine C₇-C₂₀-Alkyl-Arylgruppe, eine Trialkylsilyl-Gruppe, eine Triarylsilyl-Gruppe, eine Alkylarylsilyl-Gruppe, die gegebenenfalls substituiert sein können, bedeutet, und zwei Reste E gegebenenfalls ein mono- oder polycyclisches Ringsystem bilden können, das seinerseits substituiert sein kann,
L gleich 3 ist, wenn D ein Atom der Gruppe 15 des Periodensystems der Elemente ist, und gleich 2 ist wenn D ein Atom der Gruppe 16 des Periodensystems der Elemente ist,
Y Chlorid, Bromid, Iodid, Triflat, Mesylat, Tosylat, Benzolsulfonat, Trifluoracetat, Methylsulfat, Tetrafluorborat oder Hexafluorphosphat, bedeutet,
m 1 oder 2 ist,
m' 1 oder 2 ist"
k gleich Null oder 1 ist, wobei für k = 0 ein unverbrücktes Metallocen, für k = 1 ein verbrücktes Metalloten vorliegt,
A eine Verbrückung der Formel 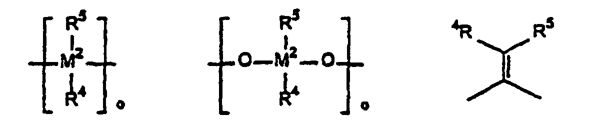 oder =BR⁴, AlR⁴, -S-, -SO-, -SO₂-, =NR⁴, =PR⁴, =P(O)R⁴, o-Phenylen, 2,2'-Biphenylen, wobei
M² Kohlenstoff, Silizium oder Germanium,
o gleich 1 oder 2 ist,
R⁴ und R⁵ unabhängig voneinander gleich oder verschieden ein Wasserstoffatom, Halogen, ein (C₁-C₂₀)Alkyl, ein (C₆-C₁₄)Aryl, ein (C₁-C₁₀)Alkoxy, ein (C₂-C₂₀)Alkenyl, ein (C₇-C₂₀)Arylalkyl, ein (C₇-C₂₀)Alkylaryl, ein (C₆-C₁₀)Aryloxy, ein (C₁-C₁₀)Fluoralkyl, ein (C₆-C₁₀)Halogenaryl, ein (C₂-C₁₀)Alkinyl, ein C₃-C₂₀-Alkylsilyl-, ein C₃-C₂₀-Arylsilyl- oder ein C₃-C₂₀-Alkylarylsilyl-, bedeuten und R⁴ und R³ gegebenenfalls ein mono- oder polycyclisches Ringsystem bilden können.

3. Verbindung nach Anspruch 1, **dadurch gekennzeichnet, daß** in Formel (1),
M¹ Zirkonium,
R¹ und R² gleich oder verschieden sind und ein Wasserstoffatom, Methyl, Ethyl, n-Propyl, iso-Propyl, n-Butyl, sec-Butyl, iso-Butyl, tert.-Butyl, n-Pentyl, verzweigtes Pentyl, n-Hexyl, verzweigtes Hexyl, Cyclohexyl, Benzyl, bedeuten,
R³ gleich oder verschieden, ein Wasserstoffatom, Methyl, Ethyl, Trifluorethyl, n-Propyl, iso-Propyl, n-Butyl, sec-Butyl, iso-Butyl, tert.-Butyl, Pentyl, Hexyl, Octyl, Cyclopropyl, Cyclopenty, Cyclohexyl, Phenyl, Tolyl; Xylyl, tert.-Butylphenyl, Ethylphenyl, Trifluormethylphenyl, Bis(trifluormethyl)phenyl, Methoxyphenyl, Fluorphenyl, Dimethylaminophenyl, Trimethyllammoniumpheny-iodid, Dimethylsulfoniumphenyl-bromid, Triethylphosphonium-phenyl-Triflat, Naphthyl, Acenaphthyl, Phenanthrenyl, Anthracenyl, eine C₁-C₂₀-heterocyclische Gruppe, die gegebenenfalls substituiert sein können, wobei der Begriff Heteroatom sämtliche Elemente mit Ausnahme von Kohlenstoff und Wasserstoff umfaßt und bevorzugt Atome der Gruppen 14, 15 oder 16 des Periodensystems der Elemente bedeutet, und zwei Reste R³ gegebenenfalls ein mono- oder polycyclisches Ringsystem bilden können, das seinerseits substituiert sein kann, wobei R³ eine kationische Gruppe (-DE_{L})⁺ Y⁻ beinhaltet
worin
D Stickstoff, Phosphor oder Schwefel,
E gleich oder verschieden ist und ein Wasserstoffatom, Methyl, Ethyl, Propyl, Butyl, Allyl, Benzyl, Methoxymethyl, Benzyloxymethyl, 2-Methoxy-ethoxymethyl, 2-Trimethylsilyl-ethoxy-methyl, Trimethylsilyl,
L gleich 3 ist, wenn D ein Atom der Gruppe 15 des Periodensystems der Elemente ist, und gleich 2 ist wenn D ein Atom der Gruppe 16 des Periodensystems der Elemente ist,
Y Chlorid, Bromid, lodid, Triflat, Mesylat, Tosylat, Benzolsulfonat, Trifluoracetat, Methylsulfat, Tetrafluorborat oder Hexafluorphosphat, bedeutet,
m gleich 1 ist,
m' gleich 1 ist,
k gleich Null oder 1 ist, wobei für k = 0 ein unverbrücktes Metalloren, für k = 1 ein verbrücktes Metallocen vorliegt,
A eine Verbrückung der Formel 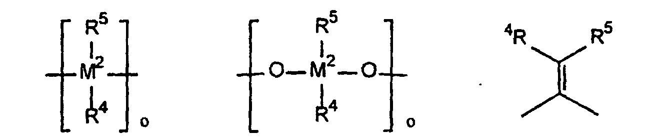 oder =BR⁴, AlR⁴, -S-, -SO-, -SO₂-, =NR⁴, =PR⁴, =P(O)R⁴, o-Phenylen, 2,2'-Biphenylen, wobei
M² Kohlenstoff oder Silizium,
o gleich 1 oder 2,
R⁴ und R⁵ unabhängig voneinander gleich oder verschieden ein Wasserstoffatom, Halogen, Methyl, Phenyl- oder Naphthyl, Trimethylsilyl, Triethylsilyl, tert.-Butyldimethylsilyl, Triphenylsilyl, Dimethylphenylsilyl, Diphenylsilyl oder Diphenyl-tert.-butylsilyl bedeuten und R⁴ und R⁵ gegebenenfalls ein mono - oder polycyclisches Ringsystem bilden können,

4. Verbindung nach Anspruch 1, **dadurch gekennzeichnet, daß** in Formel (I) A gleich Dimethylsilandiyl, Dimethylgermandiyl, Ethyliden, Methylethyliden, 1,1-Dimethylethyliden, 1,2-Dimethylethyliden, Tetramethylethyliden, Isopropyliden, Phenylmethylmethyliden oder Diphenylmethyliden ist.

5. Verbindung nach Anspruch 1, **dadurch gekennzeichnet, daß** das Metallocen durch die Formel (I*), 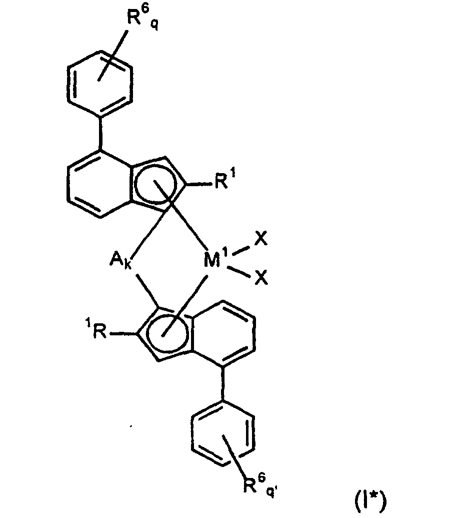 worin
M¹, A, R¹, k und X wie in Formel (I) definiert sind und
R⁶ gleich oder verschieden, ein Wasserstoffatom, eine C₁-C₂₀-Alkylgruppe, die gegebenenfalls substituiert sein kann, eine C₆-C₁₄-Arylgruppe, die gegebenenfalls substituiert sein kann, eine C₂-C₂₀-Alkinylgruppe, eine C₇-C₂₀-Alkyl-Arylgruppe, Halogen, eine OR⁴-Gruppe, eine SiR⁴₃-Gruppe, eine NR⁴₂-Gruppe, eine SR⁴-Gruppe, und zwei Reste R⁴ und R⁶, jeweils oder miteinander, ein mono- oder polycyclisches Ringsystem bilden können, das seinerseits substituiert sein kann, wobei R⁴ wie in Formel (I) definiert ist, und mindestens einer der Reste R⁶ eine kationische Gruppe (-DE_{L})⁺ Y⁻ trägt ,
worin D, E, L und Y wie in Formel (I) definiert sind,
q ist eine ganze Zahl, kleiner gleich 5 und größer gleich 1, ist,
q' ist eine ganze Zahl, kleiner gleich 5 und größer gleich 1, ist, beschrieben wird.

6. Verbindung nach Anspruch 5, **dadurch gekennzeichnet, daß** in Formel (I*),
R⁶ gleich oder verschieden, ein Wasserstoffatom, Methyl, Ethyl, Trifluormethyl, Trifluorethyl, n-Propyl, iso-Propyl, n-Butyl, sec-Butyl, iso-Butyl, tert.-Butyl, Pentyl, Hexyl, Octyl, Cyclopropyl, Cyclopenty, Cyclohexyl, Phenyl, und mindestens einer der Reste R⁶ eine kationische Gruppe (-DE_{L})⁺ Y⁻ trägt ,
worin D, E, L und Y wie in Formel (I) definiert sind,
q 1 oder 2 ist,
q' 1 oder 2 ist.

7. Verbindung nach Anspruch 1, **dadurch gekennzeichnet, daß** in Formel (I) für Dimethylsilandiylbis(2-methyl-4-(4'-trimethylammonium-phenyl)-indeny)l-dichlorozirkonium-diiodid,
Dimethylsilandiylbis(2-methyl-4-(4'-trimethylammonium-phenyl)-indeny)Idichlorotitan-diiodid,
Dimethylsilandiylbis(2-methyl-4-(4'-trimethylammonium-phenyl)-indeny)l-dichlorohafnium-diiodid,
Dimethylsilandiylbis(2-methyl-4-(3'-trimethylammonium-phenyl)-indenyl)-dichlorozirkonium-diiodid,
Dimethylsilandiylbis(2-methyl-4-(2'-trimethylammonium-phenyl)-indenyl)-dichlorozirkonium-diiodid,
Dimethylsilandiylbis(2-methyl-4-(3',5'-bis(trimethylammonium)-phenyl)-indenyl)-dichlorozirkonium-tetraiodid,
Dimethylsilandiylbis(2-methyl-4-(4'-trimethylammonium-naphthyl)-indeny)l-dichlorozirkonium-diiodid,
Dimethylsilandiylbis(2-methyl-4-(4'-trimethylammonium-phenyl)-indeny)l-dichlorozirkonium-ditosylat,
Dimethylsilandiylbis(2-ethyl-4-(4'-trimethylammonium-phenyl)-indenyl)-dichlorozirkonium-ditriflat,
Dimethylsilandiylbis(2-methyl-4-(4'-dimethylammonium-phenyl)-indenyl)-dichlorozirkonium-dichlorid,
Dimethylsilandiylbis(2-methyl-4-(4'-trimethylammonium-phenyl)-indeny)ldichlorozirkonium-bis-tetrafluorborat,
Dimethylsilandiylbis(2-methyl-4-(4'-N-methyl-N-pyrrolidino-phenyl)-indeny)l-dichlorozirkonium-diiodid,
Dimethylsilandiylbis(2-methyl-4-(4'-dimethylammonium-phenyl)-indenyl)-dichlorotitan-dichlorid,
Dimethylsilandiylbis(2-methyl-4-(4'-dimethyl(methoxymethyl)ammonium-phenyl)-indenyl)-dichlorozirkonium-dichlorid,
Dimethylsilandiylbis(2-methyl-4-(4'-dimethyl(2"-methoxy-ethoxy-methyl)ammoniumphenyl)-indenyl)-dichlorozirkonium-dichlorid,
Dimethylsilandiylbis(2-methyl-4-(4'-dimethyl(benzyloxymethyl)ammonium-phenyl)-indenyl)-dichlorozirkonium-dichlorid,
Dimethylsilandiylbis(2-methyl-4-(4'-dimethyl-(2"-trimethylsilyl-ethoxymethyl)ammonium-phenyl)-indenyl)-dichlorohafnium-dichlorid,
Dimethylsilandiylbis(2-methyl-4-(4'-dimethylbenzylammonium-phenyl)-indenyl)-dichlorozirkonium-dichlorid,
Dimethylsilandiylbis(2-methyl-4-(4'-dimethylallylammonium-phenyl)-indenyl)-dichlorozirkonium-diiodid,
Dimethylsilandiylbis(2-methyl-4-(4'-triethylammonium-phenyl)-indenyl)-dichlorozirkonium-diiodid,
Dimethylsilandiylbis(2-ethyl-4-(4'-dimethyl-(2"-trimethylsilyl-ethoxymethyl)ammonium-phenyl)-indenyl)-dichlorohafnium-dichlorid,
Dimethylsilandiylbis(2-ethyl-4-(4'-dimethylbenzylammonium-phenyl)-indenyl)-dichlorozirkonium-dichlorid,
Dimethylsilandiylbis(2-ethyl-4-(4'-dimethylallylammonium-phenyl)-indenyl)-dichlorozirkonium-diiodid,
Dimethylsilandiylbis(2-ethyl-4-(4'-trimethylammonium-phenyl)-indenyl)-dichlorozirkonium-diiodid,
Dimethylsilandiylbis(2-n-butyl-4-(4'-trimethylammonium-phenyl)-indenyl)-dichlorozirkonium-diiodid,
Dimethylsilandiylbis(2-isopropyl-4-(4'-triethylammonium-phenyl)-indenyl)-dichlorozirkonium-dibromid,
Dimethylsilandiylbis(2-iso-butyl-4-(4'-triethylammonium-phenyl)-indenyl)-dichlorozirkonium-ditriflat,
Dimethylsilandiylbis(2-ethyl-4-(4'-triethylphosphomium-phenyl)-indenyl)-dichlorozirkonium-diiodid,
Dimethylsilandiylbis(2-methyl-4-(4'-dimethylsulfonium-phenyl)-indenyl)-dichlorozirkonium-dibromid,
Dimethylsilandiylbis(2-ethyl-4-(4'-dimethylsulfonium-phenyl)-indenyl)-dichlorozirkonium-dibromid,
Dimethylsilandiylbis(2-methyl-4-(3'-dimethylsulfonium-phenyl)-indenyl)-dichlorozirkonium-dibromid,
Dimethylsilandiylbis(2-methyl-4-(2'-dimethylsulfonium-phenyl)-indenyl)-dichlorozirkonium-dibromid,
Dimethylsilandiylbis(2-methyl-4-(3',5'-Bis(dimethylsulfonium)-phenyl)-indenyl)-dichlorozirkonium-tetrabromid,
Dimethylsilandiylbis(2-methyl-4-(4'-dibenzylsulfonium-phenyl)-indenyl)-dichlorozirkonium-dibromid,
Dimethylsilandiylbis(2-methyl-4-(4'-methyl(methoxymethyl)sulfonium-phenyl)-indenyl)-dichlorozirkonium-dichlorid,
Dimethylsilandiylbis(2-methyl-4-(4'-diallylsulfonium-phenyl)-indenyl)-dichlorozirkonium-dibromid,
Dimethylsilandiylbis(2-methyl-4-(3'-diphenylethylphosphonium-phenyl)-indenyl)-dichlorozirkonium-diiodid,
Dimethylsilandiylbis(2-methyl-4-(3'-trimethylphosphonium-phenyl)-indenyl)-dichlorozirkonium-ditriflat,
Methylphenylsilandiylbis(2-iso-butyl-4-(4'-triethylammonium-phenyl)-indenyl)-dichlorozirkonium-ditosylat,
1,2-Ethandiyl-bis(2-methyl-4-(3'-dimethylammonium-phenyl)-indenyl)-dichlorozirkonium-bis-trifluoracetat,
1,2-Ethandiyl-bis(2-methyl-4-(4'-dimethylsulfonium-phenyl)-indenyl)-dichlorozirkonium-dibromid,
1,2-Ethandiyl-bis(2-methyl-4-(3'-diphenylethylphosphonium-phenyl)-indenyl)-dichlorozirkonium-diiodid,
Dimethylsilandiylbis(2-methyl-5-trimethylammonium-indenyl)-dichlorozirkoniumdichlorid,
Dimethylsilandiylbis(2-methyl-5-trimethylphosphonium-indenyl)-dichlorozirkoniumdichlorid,
1,2-Ethandiylbis(2-methyl-4-dimethylbenzylammonium-indenyl)-dichlorozirkoniumdibromid,
1,2-Ethandiylbis(2-methyl-4-phenyl-5-dimethylbenzylammonium-indenyl)-dichlorozirkonium-dibromid,
Dimethylsilandiylbis(2-methyl-4-phenyl-6-trimethylammonium-indenyl)-dichlorozirkonium-dichlorid,
Dimethylsilandiylbis(2-methyl-5-dimethylsulfonium-indenyl)-dichlorozirkoniumdibromid,
Dimethylsilandiylbis(2-methyl-4-(4'-(2"-trimethylammonium-ethyl)-phenyl-indenyl)-dichlorozirkonium-dichlorid,
Dimethylsilandiylbis(2-methyl-4-(4'-(3"-dimethylsulfonium-propyl)-phenyl-indenyl)-dichlorozirkonium-diiodid,
Dimethylsilandiylbis(2-methyl-4-(3'-(2"-trimethylammonium-ethyl)-phenyl-indenyl)-dichlorozirkonium-dichlorid,
Dimethylsilandiylbis(2-methyl-4-(2'-trimethylammonium-ethyl)-indenyl)-dichlorozirkonium-dichlorid,
oder ein Gemisch derselben steht.

8. Verfahren zur Herstellung eines Polyolefins durch Polymerisation eines oder mehrer Olefine in Gegenwart einer Verbindung der Formel (I) nach einem der Ansprüche 1 bis 5.

9. Verwendung einer Verbindung der Formel (I) nach einem der Ansprüche 1 bis 5 zur Herstellung eines Polyolefins

## Claims

1. A compound of the formula (I) 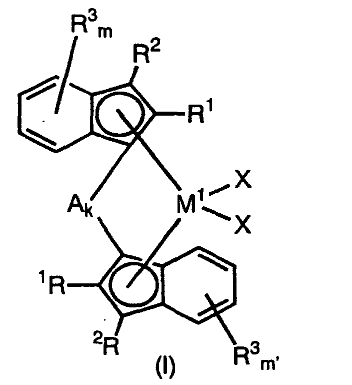 where
M¹ is a transition metal of group 4 of the Periodic Table of the Elements,
R¹ and R² are identical or different and are each a hydrogen atom, a halogen atom or a C₁-C₂₀ group,
R³ are identical or different and are each a hydrogen atom, a halogen atom or a C₁-C₄₀ group, and two radicals R³ may form a monocyclic or polycyclic ring system which may in turn be substituted, where R³ comprises a cationic group (-DE_{L})⁺ Y⁻
where
D is an atom of group 15 or 16 of the Periodic Table of the Elements,
E are identical or different and are each a hydrogen atom or a C₁-C₂₀ group, and two radicals E may form a monocyclic or polycyclic ring system which may in turn be substituted,
L is 3 when D is an atom of group 15 of the Periodic Table of the Elements and is 2 when D is an atom of group 16 of the Periodic Table of the Elements,
Y is halogen, C₁-C₁₀-alkylsulfonate, C₁-C₁₀-haloalkylsulfonate, C₆-C₂₀-arylsulfonate, C₆-C₂₀-haloarylsulfonate, C₇-C₂₀-alkylarylsulfonate, C₁-C₂₀-haloalkylcarboxylate, C₁-C₁₀-alkyl sulfate, tetrafluoroborate, hexafluorophosphate, hexafluoroantimonate or hexafluoroarsenate,
m is an integer less than or equal to 4 and greater than or equal to 1,
m' is an integer smaller than or equal to 4 and greater than or equal to 1,
k is zero or 1, where the metallocene is unbridged when k = 0 and is bridged when k = 1,
A is a bridge of the formula 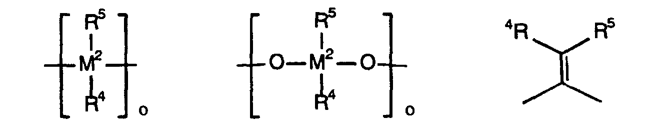
or =BR⁴, AlR⁴, -S-, -SO-, -SO₂-, =NR⁴, =PR⁴, =P(O)R⁴, o-phenylene, 2,2'-biphenylene, where
M² is carbon, silicon, germanium, tin, nitrogen or phosphorus,
o is 1, 2, 3 or 4,
R⁴ and R⁵ are identical or different and are each a hydrogen atom, halogen or a C₁-C₂₀ group, and R⁴ and R⁵ may form a monocyclic or polycyclic ring system.

2. A compound as claimed in claim 1, wherein, in formula (I),
M¹ is titanium, zirconium or hafnium,
R¹ and R² are identical or different and are each a hydrogen atom, a C₁-C₂₀-alkyl group, a C₆-C₁₄-aryl group, a C₂-C₂₀-alkenyl group, a C₂-C₂₀-alkynyl group, a C₇-C₂₀-alkylaryl group which may bear one or more identical or different halogen atoms as substituents, a halogen atom, an -SiMe₃ group or an OSiMe₃ group,
R³ are identical or different and are each a hydrogen atom, a C₁-C₂₀-alkyl group which may be substituted, a C₆-C₁₄-aryl group which may be substituted, a C₂-C₂₀-alkenyl group, a C₂-C₂₀-alkynyl group, a C₇-C₂₀-alkylaryl group, a halogen atom, an SiMe₃ group, an OSiMe₃ group, a C₁-C₂₀-heterocyclic group, each of which may be substituted, where the term hetero atom encompasses all elements with the exception of carbon and hydrogen and preferably refers to atoms of groups 14, 15 and 16 of the Periodic Table of the Elements, and two radicals R³ may form a monocyclic or polycyclic ring system which may in turn be substituted, where R³ comprises a cationic group (-DE_{L})⁺ Y⁻
where
D is nitrogen, phosphorus, oxygen or sulfur,
E are identical or different and are each a hydrogen atom, a C₁-C₂₀-alkyl group, a C₆-C₁₄-aryl group, a C₂-C₂₀-alkenyl group, a C₂-C₂₀-alkynyl group, a C₇-C₂₀-alkylaryl group, a trialkylsilyl group, a triarylsilyl group, an alkylarylsilyl group, each of which may be substituted, and two radicals E may form a monocyclic or polycyclic ring system which may in turn be substituted,
L is 3 when D is an atom of group 15 of the Periodic Table of the Elements and is 2 when D is an atom of group 16 of the Periodic Table of the Elements,
Y is chloride, bromide, iodide, triflate, mesylate, tosylate, benzenesulfonate, trifluoroacetate, methyl sulfate, tetrafluoroborate or hexafluorophosphate,
m is 1 or 2,
m' is 1 or 2,
k is zero or 1, where the metallocene is unbridged when k = 0 and is bridged when k = 1,
A is a bridge of the formula 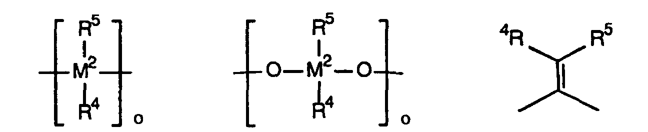
or =BR⁴, AIR⁴, -S-, -SO-, -SO₂-, =NR⁴, =PR⁴, =P(O)R⁴, o-phenylene, 2,2'-biphenylene, where
M² is carbon, silicon or germanium,
o is 1 or 2,
R⁴ and R⁵ are identical or different and are each a hydrogen atom, halogen, a C₁-C₂₀-alkyl group, a C₆-C₁₄-aryl group, a C₁-C₁₀-alkoxy group, a C₂-C₂₀-alkenyl group, a C₇-C₂₀-arylalkyl group, a C₇-C₂₀-alkylaryl group, a C₆-C₁₀-aryloxy group, a C₁-C₁₀-fluoroalkyl group, a C₆-C₁₀-haloaryl group, a C₂-C₁₀-alkynyl group, a C₃-C₂₀-alkylsilyl group, a C₃-C₂₀-arylsilyl group or a C₃-C₂₀-alkylarylsilyl group, and R⁴ and R⁵ may form a monocyclic or polycyclic ring system.

3. A compound as claimed in claim 1, wherein, in formula (I),
M¹ is zirconium,
R¹ and R² are identical or different and are each a hydrogen atom, methyl, ethyl, n-propyl, isopropyl, n-butyl, sec-butyl, isobutyl, tert-butyl, n-pentyl, branched pentyl, n-hexyl, branched hexyl, cyclohexyl or benzyl,
R³ are identical or different and are each a hydrogen atom, methyl, ethyl, trifluoroethyl, n-propyl, isopropyl, n-butyl, sec-butyl, isobutyl, tert-butyl, pentyl, hexyl, octyl, cyclopropyl, cyclopentyl, cyclohexyl, phenyl, tolyl, xylyl, tert-butylphenyl, ethylphenyl, trifluoromethylphenyl, bis(trifluoromethyl) phenyl, methoxyphenyl, fluorophenyl, dimethylaminophenyl, trimethylammoniumphenyl iodide, dimethylsulfoniumphenyl bromide, triethylphosphoniumphenyl triflate, naphthyl, acenaphthyl, phenanthrenyl, anthracenyl, a C₁-C₂₀-heterocyclic group which may be substituted, where the term hetero atom encompasses all elements with the exception of carbon and hydrogen and preferably refers to atoms of groups 14, 15 and 16 of the Periodic Table of the Elements, and two radicals R³ may form a monocyclic or polycyclic ring system which may in turn be substituted, where R³ comprises a cationic group (-DE_{L})⁺ Y⁻
where
D is nitrogen, phosphorous or sulfur,
E are identical or different and are each a hydrogen atom, methyl, ethyl, propyl, butyl, allyl, benzyl, methoxymethyl, benzyloxymethyl, 2-methoxyethoxymethyl, 2-trimethylsilylethoxymethyl or trimethylsilyl,
L is 3 when D is an atom of group 15 of the Periodic Table of the Elements and is 2 when D is an atom of group 16 of the Periodic Table of the Elements,
Y is chloride, bromide, iodide, triflate, mesylate, tosylate, benzenesulfonate, trifluoroacetate, methyl sulfate, tetrafluoroborate or hexafluorophosphate,
m is 1,
m' is 1,
k is zero or 1, where the metallocene is unbridged when k = 0 and is bridged when k = 1,
A is a bridge of the formula 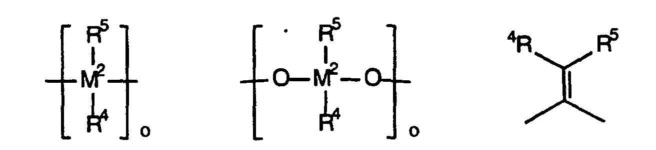
or =BR⁴, AlR⁴, -S-, -SO-, -SO₂-, =NR⁴, =PR⁴, =P(O)R⁴, o-phenylene, 2,2'-biphenylene, where
M² is carbon or silicon,
o is 1 or 2,
R⁴ and R⁵ are identical or different and are each a hydrogen atom, halogen, methyl, phenyl or naphthyl, trimethylsilyl, triethylsilyl, tert-butyldimethylsilyl, triphenylsilyl, dimethylphenylsilyl, diphenylsilyl or diphenyl-tert-butylsilyl and R⁴ and R⁵ may form a monocyclic or polycyclic ring system.

4. A compound as claimed in claim 1, wherein, in formula (I), A is dimethylsilanediyl, dimethylgermanediyl, ethylidene, methylethylidene, 1,1-dimethylethylidene, 1,2-dimethylethylidene, tetramethylethylidene, isopropylidene, phenylmethylmethylidene or diphenylmethylidene.

5. A compound as claimed in claim 1, wherein the metallocene has the formula (I*), 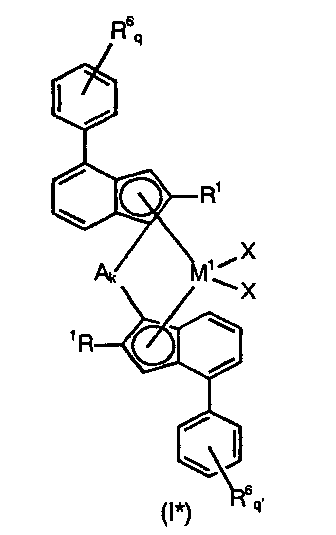 where
M¹, A, R¹, k and X are as defined in formula (I) and
R⁶ are identical or different and are each a hydrogen atom, a C₁-C₂₀-alkyl group which may be substituted, a C₆-C₁₄-aryl group which may be substituted, a C₂-C₂₀-alkynyl group, a C₇-C₂₀-alkylaryl group, halogen, an OR⁴ group, an SiR⁴₃ group, an NR⁴₂ group, an SR⁴ group, and two radicals R⁴ and R⁶, each or together, may form a monocyclic or polycyclic ring system which may in turn be substituted, where R⁴ is as defined in formula (I) and at least one of the radicals R⁶ bears a cationic group (-DE_{L})⁺ Y⁻,
where D, E, L and Y are as defined in formula (I),
q is an integer less than or equal to 5 and greater than or equal to 1,
q' is an integer less than or equal to 5 and greater than or equal to 1.

6. A compound as claimed in claim 5, wherein, in formula (I*),
R⁶ are identical or different and are each a hydrogen atom, methyl, ethyl, trifluoromethyl, trifluoroethyl, n-propyl, isopropyl, n-butyl, sec-butyl, isobutyl, tert-butyl, pentyl, hexyl, octyl, cyclopropyl, cyclopentyl, cyclohexyl, phenyl, and at least one of the radicals R⁶ bears a cationic group (-DE_{L})⁺ Y⁻,
where D, E, L and Y are as defined in formula (I),
q is 1 or 2,
q' is 1 or 2.

7. A compound as claimed in claim 1, wherein the formula (I) represents
dimethylsilanediylbis(2-methyl-4-(4'-trimethylammonium phenyl)indenyl)dichlorozirconium diiodide
dimethylsilanediylbis(2-methyl-4-(4'-trimethylammonium phenyl)indenyl)dichlorotitanium diiodide
dimethylsilanediylbis(2-methyl-4-(4'-trimethylammoniumphenyl)indenyl)dichlorohafnium diiodide
dimethylsilanediylbis(2-methyl-4-(3'-trimethylammoniumphenyl)indenyl)dichlorozirconium diiodide
dimethylsilanediylbis(2-methyl-4-(2'-trimethylammoniumphenyl)indenyl)dichlorozirconium diiodide
dimethylsilanediylbis(2-methyl-4-(3',5'-bis(trimethylammonium)phenyl)indenyl)-dichlorozirconium tetraiodide
dimethylsilanediylbis(2-methyl-4-(4'-trimethylammoniumnaphthyl)indenyl)dichlorozirconium diiodide
dimethylsilanediylbis(2-methyl-4-(4'-trimethylammoniumphenyl)indenyl)dichlorozirconium ditosylate
dimethylsilanediylbis(2-ethyl-4-(4'-trimethylammoniumphenyl)indenyl)dichlorozirconium ditriflate
dimethylsilanediylbis(2-methyl-4-(4'-dimethylammoniumphenyl)indenyl)dichlorozirconium dichloride
dimethylsilanediylbis(2-methyl-4-(4'-trimethylammoniumphenyl)indenyl)dichlorozirconium bistetrafluoroborate
dimethylsilanediylbis(2-methyl-4-(4'-N-methyl-N-pyrrolidinophenyl)indenyl)-dichlorozirconium diiodide
dimethylsilanediylbis(2-methyl-4-(4'-dimethylammoniumphenyl)indenyl)dichlorotitanium dichloride
dimethylsilanediylbis(2-methyl-4-(4'-dimethyl(methoxymethyl)ammoniumphenyl)-indenyl)dichlorozirconium dichloride
dimethylsilanediylbis(2-methyl-4-(4'-dimethyl(2"-methoxyethoxymethyl)-ammoniumphenyl)indenyl)dichlorozirconium dichloride
dimethylsilanediylbis(2-methyl-4-(4'-dimethyl(benzyloxymethyl)ammoniumphenyl)-indenyl)dichlorozirconium dichloride
dimethylsilanediylbis(2-methyl-4-(4'-dimethyl(2"-trimethylsilylethoxymethyl)-ammoniumphenyl)indenyl)dichlorohafnium dichloride
dimethylsilanediylbis(2-methyl-4-(4'-dimethylbenzylammoniumphenyl)indenyl)-dichlorozirconium dichloride
dimethylsilanediylbis(2-methyl-4-(4'-dimethylallylammoniumphenyl)indenyl)-dichlorozirconium diiodide
dimethylsilanediylbis(2-methyl-4-(4'-triethylammoniumphenyl)indenyl)dichlorozirconium diiodide
dimethylsilanediylbis(2-ethyl-4-(4'-dimethyl(2"-trimethylsilylethoxymethyl)-ammoniumphenyl)indenyl)dichlorohafnium dichloride
dimethylsilanediylbis(2-ethyl-4-(4'-dimethylbenzylammoniumphenyl)indenyl)-dichlorozirconium dichloride
dimethylsilanediylbis(2-ethyl-4-(4'-dimethylallylammoniumphenyl)indenyl)dichlorozirconium diiodide
dimethylsilanediylbis(2-ethyl-4-(4'-trimethylammoniumphenyl)indenyl)dichlorozirconium diiodide
dimethylsilanediylbis(2-n-butyl-4-(4'-trimethylammoniumphenyl)indenyl)dichlorozirconium diiodide
dimethylsilanediylbis(2-isopropyl-4-(4'-triethylammoniumphenyl)indenyl)dichlorozirconium dibromide
dimethylsilanediylbis(2-isobutyl-4-(4'-triethylammoniumphenyl)indenyl)dichlorozirconium ditriflate
dimethylsilanediylbis(2-ethyl-4-(4'-triethylphosphoniumphenyl)indenyl)dichlorozirconium diiodide
dimethylsilanediylbis(2-methyl-4-(4'-dimethylsulfoniumphenyl)indenyl)dichlorozirconium dibromide
dimethylsilanediylbis(2-ethyl-4-(4'-dimethylsulfoniumphenyl)indenyl)dichlorozirconium dibromide
dimethylsilanediylbis(2-methyl-4-(3'-dimethylsulfoniumphenyl)indenyl)dichlorozirconium dibromide
dimethylsilanediylbis(2-methyl-4-(2'-dimethylsulfoniumphenyl)indenyl)dichlorozirconium dibromide
dimethylsilanediylbis(2-methyl-4-(3',5'-bis(dimethylsulfonium)phenyl)indenyl)-dichlorozirconium tetrabromide
dimethylsilanediylbis(2-methyl-4-(4'-dibenzylsulfoniumphenyl)indenyl)dichlorozirconium dibromide
dimethylsilanediylbis(2-methyl-4-(4'-methyl(methoxymethyl)sulfoniumphenyl)-indenyl)dichlorozirconium dichloride
dimethylsilanediylbis(2-methyl-4-(4'-diallylsulfoniumphenyl)indenyl)dichlorozirconium dibromide
dimethylsilanediylbis(2-methyl-4-(3'-diphenylethylphosphoniumphenyl)indenyl)-dichlorozirconium diiodide
dimethylsilanediylbis(2-methyl-4-(3'-trimethylphosphoniumphenyl)indenyl)dichlorozirconium ditriflate
methylphenylsilanediylbis(2-isobutyl-4-(4'-triethylammoniumphenyl)indenyl)-dichlorozirconium ditosylate
1,2-ethanediylbis(2-methyl-4-(3'-dimethylammoniumphenyl)indenyl)dichlorozirconium bistrifluoroacetate
1,2-ethanediylbis(2-methyl-4-(4'-dimethylsulfoniumphenyl)indenyl)dichlorozirconium dibromide
1,2-ethanediylbis(2-methyl-4-(3'-diphenylethylphosphoniumphenyl)indenyl)-dichlorozirconium diiodide
dimethylsilanediylbis(2-methyl-5-trimethylammoniumindenyl)dichlorozirconiumdichloride
dimethylsilanediylbis(2-methyl-5-trimethylphosphoniumindenyl)dichlorozirconiumdichloride
1,2-ethanediylbis(2-methyl-4-dimethylbenzylammoniumindenyl)dichlorozirconiumdibromide
1,2-ethanediylbis(2-methyl-4-phenyl-5-dimethylbenzylammoniumindenyl)dichlorozirconium dibromide
dimethylsilanediylbis(2-methyl-4-phenyl-6-trimethylammoniumindenyl)dichlorozirconium dichloride
dimethylsilanediylbis(2-methyl-5-dimethylsulfoniumindenyl)dichlorozirconium dibromide
dimethylsilanediylbis(2-methyl-4-(4'-(2"-trimethylammoniumethyl)phenylindenyl)-dichlorozirconium dichloride
dimethylsilanediylbis(2-methyl-4-(4'-(3"-dimethylsulfoniumpropyl)phenylindenyl)-dichlorozirconium diiodide
dimethylsilanediylbis(2-methyl-4-(3'-(2"-trimethylammoniumethyl)phenylindenyl)-dichlorozirconium dichloride
dimethylsilanediylbis(2-methyl-4-(2'-trimethylammoniumethyl)indenyl)dichlorozirconium dichloride
or a mixture thereof.

8. A process for preparing a polyolefin by polymerization of one or more olefins in the presence of a compound of the formula (I) as claimed in any of claims 1 to 5.

9. The use of a compound of the formula (I) as claimed in any of claims 1 to 5 for preparing a polyolefin.

## Revendications

1. Composé de formule (I) 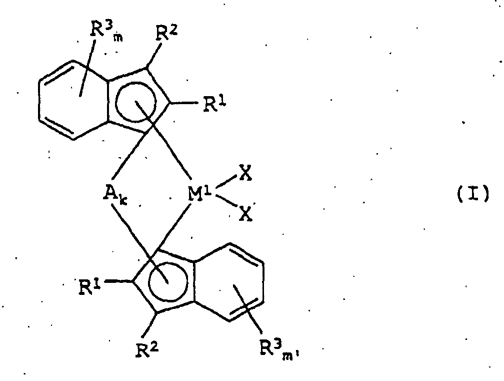 dans laquelle
M¹ est un métal de transition du groupe 4 de la classification périodique des éléments,
R¹ et R² sont identiques ou différents et représentent un atome d'hydrogène, un atome d'halogène, un groupe carboné en C₁ à C₂₀,
R³ est identique ou différent et représente un atome d'hydrogène, un atome d'halogène ou un groupe carboné en C₁ à C₄₀, et deux résidus R³ peuvent le cas échéant former un système mono- ou polycyclique qui peut lui-même être substitué, R³ contenant un groupe cationique (-DE_{L})⁺Y⁻, dans lequel
D représente un atome des groupes 15 ou 16 de la classification périodique des éléments (CPE),
E est identique ou différent et représente un atome d'hydrogène, un groupe carboné en C₁ à C₂₀, et deux résidus E peuvent le cas échéant former un système mono- ou polycyclique qui peut lui-même être substitué,
L est égal à 3 lorsque D est un atome du groupe 15 de la classification périodique des éléments, et est égal à 2 lorsque D est un atome du groupe 16 de la classification périodique des éléments,
Y représente un halogène, un alkylsulfonate en C₁ à C₁₀, un haloalkylsulfonate en C₁ à C₁₀, un arylsulfonate en C₆ à C₂₀, un haloarylsulfonate en C₆ à C₂₀, un alkylarylsulfonate en C₁ à C₂₀, un haloalkylcarboxylate en C₁ à C₂₀, un alkylsulfate en C₁ à C₁₀, un tétrafluoroborate, un hexafluorophosphate, un hexafluoroantimoniate ou un hexafluoroarséniate,
m est un nombre entier inférieur ou égal à 4 et supérieur ou égal à 1,
m' est un nombre entier inférieur ou égal à 4 et supérieur ou égal à 1,
k vaut 0 ou 1, donnant pour k = 0 un métallocène non ponté, pour k = 1 un métallocène ponté,
A est un groupe de liaison des formules 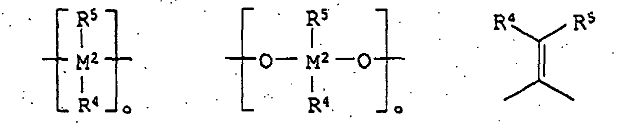 ou bien =BR⁴, AlR⁴, -S-, -SO-, -SO₂-, =NR⁴, =PR⁴, -P(O)R⁴, o-phénylène, 2,2'-biphénylène, dans lesquelles
M² est un atome de carbone, silicium, germanium, étain, azote ou phosphore,
o est égal à 1, 2, 3 ou 4,
R⁴ et R⁵ sont indépendamment l'un de l'autre identiques ou différents et représentent un atome d'hydrogène, un halogène ou un groupe carboné en C₁ à C₂₀, et R⁴ et R⁵ peuvent le cas échéant former un système mono- ou polycyclique.

2. Composé selon la revendication 1, **caractérisé en ce que**, dans la formule (I),
M¹ représente un atome de titane, zirconium ou hafnium,
R¹ et R² sont identiques ou différents et représentent un atome d'hydrogène ; un groupe alkyle en C₁ à C₂₀, un groupe aryle en C₆ à C₁₄, un groupe alcényle en C₂ à C₂₀, un groupe alcynyle en C₂ à C₂₀, un groupe alkylaryle en C₇ à C₂₀, qui peuvent le cas échéant être uni- ou pluri-substitués de manière identique ou différente par un halogène ; un atome d'halogène ; un groupe -SiMe₃ ; un groupe OsiMe₃,
R³ est identique ou différent et représente un atome d'hydrogène, un groupe alkyle en C₁ à C₂₀ qui peut le cas échéant être substitué, un groupe aryle en C₆ à C₁₄ qui peut le cas échéant être substitué, un groupe alcényle en C₂ à C₂₀, un groupe alcynyle en C₂, à C₂₀, un groupe alkylaryle en C₇ à C₂₀, un atome d'halogène, un groupe SiMe₃, un groupe OsiMe₃, un groupe hétérocyclique en C₁ à C₂₀ qui peuvent le cas échéant être substitués, le terme hétéroatome englobant tous les éléments à l'exception du carbone et de l'hydrogène, de préférence des atomes des groupes 19, 15 où 16 de la classification périodique des éléments, et deux résidus R³ peuvent le cas échéant former un système mono- ou polycyclique qui peut lui-même être substitué, R³ contenant un groupe cationique (-DE_{L})⁺Y⁻, dans lequel
D représente un atome d'azote, phosphore, oxygène ou soufre,
E est identique ou différent et représente un atome d'hydrogène, un groupe alkyle en C₁ à C₂₀, un groupe aryle en C₆ à C₁₄, un groupe alcényle en C₂ à C₂₀, un groupe alcynyle en C₂ à C₂₀, un groupe alkylaryle en C₇ à C₂₀, un groupe trialkylsilyle, un groupe triarylsilyle qui peuvent le cas échéant être substitués, et deux résidus E peuvent le c'as échéant former un système mono- ou polycyclique qui peut lui-même être substitué,
L est égal à 3 lorsque D est un atome du groupe 13 de la classification périodique des éléments, et est égal à 2 lorsque D est un atome du groupe 16 de la classification périodique des éléments,
Y représente un chlorure, un bromure, un iodure, un triflate, un mésylate, un tosylate, un benzènesulfonate, un trifluoroacétate, un méthylsulfate, un tétrafluoroborate ou un hexafluorophosphate,
m vaut 1 ou 2,
m' vaut 1 ou 2,
k vaut 0 ou 1, donnant pour k = 0 un métallocène non ponté,
A est un groupe de liaison des formules 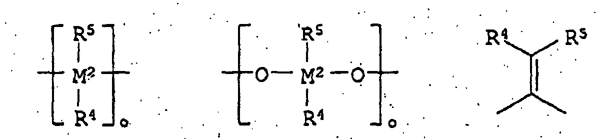 ou bien =BR⁴, AlR⁴, -S-, -SO-, -SO₂-, =NR⁴, =PR⁴, =P(O)R⁴, o-phénylène, 2,2'-biphénylène, dans lesquelles
M² est un atome de carbone, silicium ou germanium,
o est égal à 1 ou 2,
R⁴ et R⁵ sont indépendamment l'un de l'autre identiques ou différents et représentent un atome d'hydrogène, un halogène, un alkyle en C₁ à C₂₀, un aryle en C₆ à C14, un alcoxy en C₁ à C₁₀, un alcényle en C₂ à C₂₀, un arylalkyle en C₇ à C₂₀, un alkylaryle en C₇ à C₂₀, un aryloxy en C₆ à C₁₀, un fluoroalkyle en C₁ à C₁₀, un haloaryle en C₆ à C₁₀, un alcynyle en C₂ à C₁₀, un alkylsilyle en C₃ à C₂₀, un arylsilyle en C₃ à C₁₀ ou un alkylarylsilyle en C₃ à C₂₀, et R⁴ et R⁵ peuvent le cas échéant former un système mono- ou polycyclique.

3. Composé selon la revendication 1, **caractérisé en ce que**, dans la formule (I),
M¹ est un atome de zirconium,
R¹ et R² sont identiques ou différents et représentent un atome d'hydrogène, un groupe méthyle, éthyle, n-propyle, isopropyle, n-butyle, sec-butyle, isobutyle, tert-butyle, n-pentyle, pentyle ramifié, n-héxyle, hexyle ramifié, cyclohexyle, benzyle,
R³ est identique ou différent et représente un atome d'hydrogène, un groupe méthyle, éthyle, trifluoroéthyle, n-propyle, isopropyle, n-butyle, sec-butyle, isobutyle, tert-butyle, pentyle, hexyle, octyle, cyclopropyle, cyclopentyle, cyclohexyle, phényle, tolyle, xylyle, tert-butylphényle, éthylphényle, trifluorométhylphényle, bis-(trifluorométhyl)phényle, méthoxyphényle, fluorophényle, diméthylaminophényle, iodure de triméthylammoniumphényle, bromure de diméthylsulfoniumphényle, triflate de triéthylphosphoniumphényle, naphtyle, acénaphtyle, phénanthrényle, anthracényle, un groupe hétérocyclique en C₁ à C₂₀ qui peuvent le cas échéant être substitués, le terme hétéroatome englobant tous les éléments à l'exception du carbone et de l'hydrogène, de préférence des atomes des groupes 14, 15 ou 16 de la classification périodique des éléments, et deux résidus R³ peuvent le cas échéant former un système mono- ou polycyclique qui peut-lui-même être substitué, R³ contenant un groupe cationique (-DE_{L})⁺Y⁻, dans lequel
D est un atome d'azote, de phosphore ou de soufre,
E est identique ou différent et représente un atome d'hydrogène, un groupe méthyle, éthyle, propyle, butyle, allyle, benzyle, méthoxyméthyle, benzyloxyméthyle, 2-méthoxyéthoxyméthyle, 2-triméthylsilyléthoxyméthyle, triméthylsilyle,
L est égal à 3 lorsque D est un atome du groupe 15 de la classification périodique des éléments, et est égal à 2 lorsque D est un atome du groupe 16 de la classification périodique des éléments,
Y représenté un chlorure, un bromure, un iodure, un triflate, un mésylate, un tosylate, un benzènesulfonate, un trifluoroacétate, un méthylsulfate, un tétrafluoroborate ou un hexafluorophosphate,
m est égal à 1,
m' est égal à 1,
k vaut 0 ou 1, donnant pour k = 0 un métallocène non ponté, pour k = 1 un métallocène ponté,
A est un groupe de liaison des formules 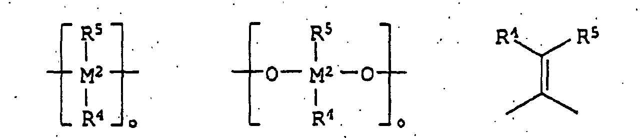 ou bien =BR⁴, AlR⁴, -S-, -SO-, -SO₂-, =NR⁴, =PR⁴, =P(O)R⁴, o-phénylène, 2,2'-biphénylène, dans lesquelles
M² est un atome de carbone ou de silicium,
o est égal à 1 ou 2,
R⁴ et R⁵ sont indépendamment l'un de l'autre identiques ou différents et représentent un atome d'hydrogène, un halogène, un groupe méthyle, phényle ou naphtyle, triméthylsilyle, triéthylsilyle, tert-butyldiméthylsilyle, triphénylsilyle, diméthylphénylsilyle, diphénylsilyle ou diphényl-tert-butylsilyle, et R⁴ et R⁵ peuvent le cas échéant former un système mono- ou polycyclique.

4. Composé selon la revendication 1, **caractérisé en ce que**, dans la formule (I), A représente un groupe diméthylsilanediyle, diméthylgermanediyle, éthylidène, méthyléthylidène, 1,1-diméthyléthylidène, 1,2-diméthyléthylidène, tétraméthyléthylidène, isopropylidène, phénylméthylméthylidène ou diphénylméthylidène.

5. Composé selon la revendication 1, **caractérisé en ce que** le métallocène est décrit par la formule (I*), 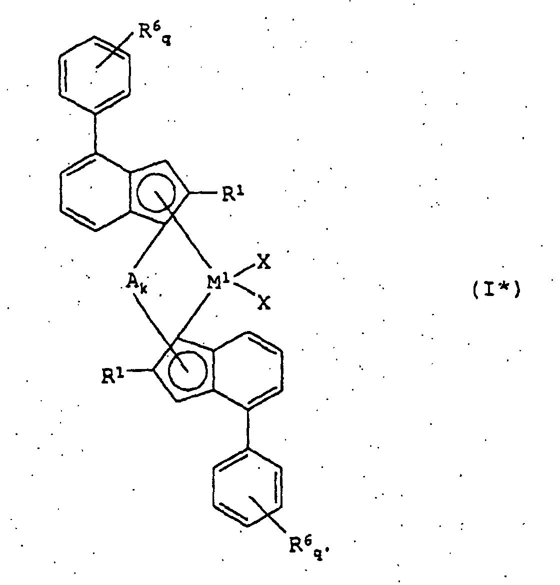 dans laquelle
M¹, A, R¹, k et X sont tels que définis dans la formule (I), et
R⁶ est identique ou différent et représénte un atome d'hydrogène, un groupe alkyle en C₁ à C₂₀ qui peut le cas échéant être substitué, un groupe aryle en C₆ à C₁₄ qui peut le cas échéant être substitué, un groupe alcynyle en C₂ à C₂₀, un groupe alkylaryle en C₇ à C₂₀, un halogène, un groupe OR⁴, un groupe SiR⁴₃, un groupe NR⁴₂, un groupe SR⁴, et deux résidus R⁴ et R⁶, respectivement ou l'un avec l'autre, peuvent former un système mono- ou polycyclique qui peut lui-même être substitué, R⁴ étant tel que défini dans la formule (I), et l'un au moins des résidus R⁶ porte un groupe cationique (-DE_{L})⁺Y⁻, dans lequel D, E, L et Y sont tels que définis dans la formule (I),
q est un nombre entier inférieur ou égal à 5 et supérieur ou égal à 1,
q' est un nombre entier inférieur ou égal à 5 et supérieur ou égal à 1.

6. Composé selon la revendication 5, **caractérisé en ce que**, dans la formule (I*),
R⁶ est identique ou différent et représente un atome d'hydrogène, un groupe méthyle, éthyle, trifluorométhyle, trifluoroéthle, n-propyle, isopropyle, n-butyle, sec-butyle, isobutyle, text-butyle, pentyle, hexyle, octyle, cyclopropyle, cyclopéntyle, cyclohexyle, phényle, et l'un au moins des résidus R⁶ porte un groupe cationique (-DE_{L})⁺Y⁻, dans lequel
D, E, L et Y sont tels que définis dans la formule (I), q vaut 1 ou 2,
q' vaut 1 ou 2,

7. Composé selon la revendication 1, **caractérisé en ce que** la formule (I) représente les
Diiodure de diméthlsilanediylbis(2-méthyl-4-(4'-triméthylammoniumphényl)indényl)dichlorozirconium,
Diiodure de diméthylsilanediylbis(2-méthyl-4-(4'-triméthylammoniumphényl)indényl)dichlorotitane,
Diiodure de diméthylsilanediylbis(2-méthyl-4-(4'-triméthylammoniumphényl)indényl)dichlorohafnium,
Diiodure de diméthylsilanediylbis(2-méthyl-4-(3'-triméthylammoniumphényl)indényl)dichlorozirconium,
Diiodure de diméthylsilanediylbis(2-méthyl-4-(2'-triméthylammoniumphényl)indényl)dichlorozirconium,
Tétraiodure de diméthylsilanediylbis(2-méthyl-4-(3',5'-bis(triméthylammonium)phényl)indényl)dichlorozirconium,
Diiodure de diméthylsilanediylbis(2-méthyl-4-(4'-triméthylammoniumnaphtyl)indényl)dichlorozirconium,
Ditosylate de diméthylsilanediylbis(2-méthyl-4-(4'-triméthylammoniumphényl)indényl)dichlorozirconium,
Ditriflate de diméthylsilanediylbis(2-éthyl-4-(4'-triméthylammoniumphényl)indényl)dichlorozirconium,
Dichlorure de diméthylsilanediylbis(2-méthyl-4-(4'-diméthylammoniumphényl)indényl)dichlorozirconium,
Bis-tétrafluoroborate de diméthylsilanediylbis(2-méthyl-9-(4'-triméthylammoniumphényl)indényl)dichlorozirconium,
Diiodure de diméthylsilanediylbis(2-méthyl-4-(4'-N-méthyl-N-pyrrolidinophényl)indényl)dichlorozirconium,
Dichlorure de diméthylsilanediylbis(2-méthyl-4-(4'-diméthylammoniumphényl)indényl)dichlorotitane,
Dichlorure de diméthylsilanediylbis(2-méthyl-4-(4'-diméthyl(méthoxyméthyl)ammoniumphényl)indényl)-dichlorozirconium,
Dichlorure de diméthylsilanediylbis(2-méthyl-4-(4'-diméthyl-(2"-méthoxyéthoxyméthyl)ammoniumphényl)-indényl)dichlorozirconium,
Dichlorure de diméthylsilanediylbis(2-méthyl-4-(4'-diméthyl(benzyloxyméthyl)ammoniumphényl)indényl)-dichlorozirconium,
Dichlorure de diméthylsilanediylbis(2-méthyl-4-(4'-diméthyl-(2"-triméthylsilyléthoxyméthyl)ammoniumphényl)indényl)dichlorohafnium,
Dichlorure de diméthylsilanediylbis(2-méthyl-4-(4'-diméthylbenzylammoniumphényl)indényl)dichlorozirconium,
Diiodure de diméthylsilanediylbis(2-méthyl-4-(4'-diméthylallylammoniumphényl)indényl)dichlorozirconium,
Diiodure de diméthylsilanediylbis(2-méthyl-4-(4'-triéthylammoniumphényl)indényl)dichlorozirconium,
Dichlorure de diméthylsilanediylbis(2-éthyl-4-(4'-diméthyl-(2"-triméthylsilyléthoxyméthylammoniumphényl)indényl)dichlorohafnium,
Dichlorure de diméthylsilanediylbis(2-éthyl-4-(4'-diméthylbenzylammoniumphényl)indényl)dichlorozirconium,
Diiodure de diméthylsilanediylbis(2-éthyl-4-(4'-diméthylallylammoniumphényl)indényl)dichlorozirconium,
Diiodure de diméthylsilanediylbis(2-éthyl-4-(4'-triméthylammoniumphényl)indényl)dichlorozirconium,
Diiodure de diméthylsilanediylbis(2-n-butyl-4-(4'-triméthylammoniumphényl)indényl)dichlorozirconium,
Dibromure de diméthylsilanediylbis(2-isopropl-4-(4'-triéthylammoniumphényl)indényl)dichlorozirconium,
Ditriflate de diméthylsilanediylbis(2-isobutyl-4-(4'-triéthylammoniumphényl)indényl)dichlorozirconium,
Diiodure de diméthylsilanediylbis(2-éthyl-4-(4'-triéthylphosphoniumphényl)indényl)dichlorozirconium,
Dibromure de diméthylsilanediylbis(2-méthyl-4-(4'-diméthylsulfoniumphényl)indényl)dichlorozirconium,
Dibromure de diméthylsilanediylbis(2-éthyl-4-(4'-diméthylsulfoniumphényl)indényl)dichlorozirconium,
Dibromure de diméthylsilanediylbis(2-méthyl-4-(3'-diméthylsulfoniumphényl)indényl)dichlorozirconium,
Dibromure de diméthylsilanediylbis(2-méthyl-4-(2'-diméthylsulfoniumphényl)indényl)dichlorozirconium,
Tétrabromure de diméthylsilanediylbis(2-méthyl-4-(3',5'-bis(diméthylsulfonium)phényl)indényl)dichlorozirconium,
Dibromure de diméthylsilanediylbis(2-méthyl-4-(4'-dibenzylsulfoniumphényl)indényl)dichlorozirconium,
Dichlorure de diméthylsilanediylbis(2-méthyl-4-(4'-méthyl-(méthoxyméthyl)sulfoniumphényl)indényl)dichlorozirconium,
Dibromure de diméthylsilanediylbis(2-méthyl-4-(4'-diallylsulfoniumphényl)indényl)dichlorozirconium,
Diiodure de diméthylsilanediylbis(2-méthyl-4-(3'-diphényléthylphosphoniumphényl)indényl)dichlorozirconium,
Ditriflate de diméthylsilanediylbis(2-méthyl-4-(3'-triméthylphosphoniumphényl)indényl)dichlorozirconium,
Ditosylate de méthylphénylsilanediylbis(2-isobutyl-4-(4'-triéthylammoniumphényl)indényl)dichlorozirconium,
Bis-trifluoroacétate de 1,2-éthanediylbis(2-méthyl-4-(3'-diméthylammoniumphényl)indényl)dichlorozirconium,
Dibromure de 1,2-éthanediylbis(2-méthyl-4-(4'-diméthylsulfoniumphényl)indényl)dichlorozirconium,
Diiodure de 1,2-éthanediylbis(2-méthyl-4-(3'-diphényléthylphosphoniumphényl)indényl)dichlorozirconium,
Dichlorure de diméthylsilanediylbis(2-méthyl-5-triméthylammoniumindényl)dichlorozirconium,
Dichlorure de diméthylsilanediylbis(2-méthyl-5-triméthylphosphoniumindényl)dichlorozirconium,
Dibromure de 1,2-éthanedilbis(2-méthyl-4-diméthylbenzylammoniumindényl)dichlorozirconium,
Dibromure de 1,2-éthanediylbis(2-méthyl-4-phényl-5-diméthylbenzylammoniumindényl)dichlorozirconium,
Dichlorure de diméthylsilanediylbis(2-méthyl-4-phényl-6-triméthylammoniumindényl)dichlorozirconium,
Dibromure de diméthylsilanediylbis(2-méthyl-5-diméthylsulfoniumindényl)dichlorozirconium,
Dichlorure de diméthylsilanediylbis(2-méthyl-4-(4'-(2"-triméthylammoniuméthyl)phénylindényl)dichlorozirconium,
Diiodure de diméthylsilanédiylbis(2-méthyl-4-(4'-(3"-diméthylsulfoniumpropyl)phénylindényl)dichloxozirconium,
Dichlorure de diméthylsilanediylbis(2-méthyl-4-(3'-(2"-triméthylammoniuméthyl)phénylindényl)dichlorozirconium,
Dichlorure de diméthylsilanediylbis(2-méthyl-4-(2"-triméthylammoniuméthyl)indényl)dichlorozirconium,
ou un mélange de ceux-ci.

8. Procédé de fabrication d'une polyoléfine par polymérisation d'une ou plusieurs oléfines en présence d'un composé de la formule (I) selon l'une des revendications 1 à 5.

9. Utilisation d'un composé de la formule (I) selon l'une des revendications 1 à 5 pour fabriquer une polyoléfine.
